Europäisches Patentamt

European Patent Office

Office européen des brevets

(11) Veröffentlichungsnummer: **0 293 797 B1**

(12) **EUROPÄISCHE PATENTSCHRIFT**

(45) Veröffentlichungstag der Patentschrift: **18.08.93**

(21) Anmeldenummer: **88108604.5**

(22) Anmeldetag: **30.05.88**

(51) Int. Cl.⁵: **G11B 11/10**

(54) **Magnetooptische Aufzeichnungsplatte.**

(30) Priorität: **02.06.87 US 57450**

(43) Veröffentlichungstag der Anmeldung:
**07.12.88 Patentblatt 88/49**

(45) Bekanntmachung des Hinweises auf die
Patenterteilung:
**18.08.93 Patentblatt 93/33**

(84) Benannte Vertragsstaaten:
**AT BE CH DE ES FR GB IT LI NL SE**

(56) Entgegenhaltungen:
**EP-A- 0 178 423**
**DE-A- 3 519 070**
**GB-A- 2 175 160**

**PATENT ABSTRACTS OF JAPAN, Bd. 10, Nr.**
**74 (P-439)(2131) 25 März 1986;& JP-**
**A-60212849**

**PATENT ABSTRACTS OF JAPAN, Bd. 9, Nr.**
**182 (P-376)(1905) 27 Juli 1985;& JP-A-6052944**

(73) Patentinhaber: **HOECHST AKTIENGESELL-**
**SCHAFT**

**D-65926 Frankfurt(DE)**

(72) Erfinder: **Spong, Fred W.**
**2208 Holyoke Drive**
**Boulder Colorado 80303(US)**
Erfinder: **Muchnik, Boris J.**
**4391 Poli Way**
**Boulder Colorado 80301(US)**
Erfinder: **Smith, Christopher A.**
**1690 Orchard Avenue**
**Boulder Colorado 80302(US)**

**Beschreibung**

Die Erfindung betrifft eine magnetooptische Aufzeichnungsplatte mit einer ersten löschbaren Aufzeichnungsstruktur auf einem Träger für die magnetooptische Aufzeichnung, die in Anwesenheit eines Magnetfeldes durch einen Schreibstrahl erfolgt, der auf eine Einfallseite der Aufzeichnungsplatte auftrifft, wobei zumindest ein Teil des Trägers von einer ersten Stützstruktur überlagert ist, die eine von der löschbaren Aufzeichnungsstruktur beabstandete Stützfläche aufweist, auf der ein erstes ebenes Fenster befestigt ist, das einen Spalt mit der Seite der ersten löschbaren magnetooptischen Aufzeichnungsstruktur einschließt, die der Einfallseite zugewandt ist.

Bei der Technik der löschbaren magnetooptischen Aufzeichung und insbesondere auf dem Gebiet der Aufzeichnungsplatten wird ein hohes Signal-zu-Rausch-Verhältnis der Ausgangssignale beim Auslesen der Platten angestrebt.

Aus dem Dokument DE-A - 35 19 070, gegenüberdem der Anspruch 1 abgegrenzt ist, ist ein magnetooptisches Aufzeichnungsmedium mit einer magnetischen Schicht, die eine senkrechte magnetische Anisotropie besitzt, einer lichtdurchlässigen Schutzschicht auf einem Substrat bekannt, wobei die lichtdurchlässige Schutzschicht in Gestalt einer Schutzplatte über einen Abstandshalter an die Fläche der magnetischen Schicht anschließt.

Bei der magnetooptischen Aufzeichnung handelt es sich um eine thermomagnetische Aufzeichnung oder thermomagnetooptische Aufzeichnung. Diese beiden Bezeichnungen beziehen sich auf eine Technologie, die zur Zeit weltweit entwickelt wird und die verspricht, die Kapazität und die Packungsdichte der optischen Aufzeichnung mit der Löschbarkeit der herkömmlichen magnetischen Aufzeichnung zu kombinieren. Die Grundprinzipien der magnetooptischen Aufzeichnung sind beispielsweise in der US-A - 3,949,387 beschrieben. Im Unterschied zu der herkömmlichen optischen Aufzeichnung, bei der eine optische Schicht abgetragen wird, beispielsweise um Unterschiede in der Reflexion eines Laserstrahls zu erzeugen, der die Platte liest, wird bei der magnetooptischen Aufzeichnung das Herbeiführen und Detektieren relativ kleiner Drehungen der Polarisationsebene eines linear polarisierten Lesestrahls genutzt, der von der Platte reflektiert wird. Dieser Vorgang wird als Kerrmagnetooptische Aufzeichnung bezeichnet, und bei einer derartigen Drehung der Polarisationsebene handelt es sich um den sogenannten polaren "magnetooptischen Kerr-Effekt" oder, in der Kurzbezeichnung, um den "Kerr-Effekt". Der Betrag einer derartigen Polarisationsdrehung des Lesestrahls hängt in äußerst erwünschter Weise nur von der Magnetisierung der dünnen magnetooptischen Aufzeichnungsstruktur an der bestimmten Stelle ab, auf die der Lesestrahl auf der Platte auftrifft.

Es ist gängige Praxis bei der gegenwärtigen magnetooptischen Aufzeichnung, die magnetooptische Platte zum Lesen, Löschen und Einschreiben mittels eines fokussierten Laserstrahls zu adressieren, der eine transparente Scheibe aus Glas oder Kunststoff durchstrahlt, die als ein Träger für die dünne magnetooptische Aufzeichnungsstruktur dient. Derartiges Adressieren für den Schreibvorgang oder das Löschen erfolgt in Anwesenheit eines Magnetfeldes. Der Träger der magnetooptischen Platte, der üblicherweise ungefähr 1,2 mm dick ist, dient ebenso zum Defokussieren von Staub, der an der Oberfläche des Trägers vorhanden sein kann, und kann darüber hinaus mit Rillen oder sonstigen Kennzeichnungen bzw. Merkmalen ausgestattet sein, um Information für die Spurführung und dergleichen zu erhalten. Ein Problem bei den magnetooptischen Aufzeichnungsplatten besteht in der Doppelbrechung eines derartigen Trägers.

Unter Doppelbrechung ist das Phänomen zu verstehen, daß ein optisches Material im Spannungszustand beispielsweise nicht homogen und nicht isotrop in bezug auf den Brechungsindex ist. Dies bedeutet, daß Licht mit unterschiedlichen Polarisationszuständen voneinander leicht unterschiedliche Brechungsindices in einem derartigen optischen Material vorfindet. Da das Auslesen von aufgezeichneter Information mittels des Kerr-Effekts auf dem Detektieren relativ kleiner Drehungen der Polarisationsebenen beruht, die in der Größenordnung von 1° liegen, und da der Auslesestrahl des Lichtes einen derartigen Träger zweimal durchläuft, stellt die optische Verzögerung, bewirkt durch die Drehung der Polarisationsebene infolge der Doppelbrechung, eine sehr wichtiges Problem für die magnetooptische Aufzeichnung dar. Es gilt, insbesondere für bekannte magnetooptische Aufzeichnungsplatten, daß eine Toleranz von 30 nm infolge der optischen Verzögerung durch den doppelten Durchgang und eine weitere Toleranz für den Verzögerungsgradienten von ungefähr 30 nm/cm erforderlich sind, um eine zufriedenstellende Wirkungsweise eines derartigen Substrats in bezug auf die Doppelbrechung sicherzustellen.

Es hat sich gezeigt, daß es sehr schwierig ist, diesen niedrigen Wert für die Doppelbrechung in bevorzugten optischen Kunststoffen, wie beispielsweise Polykarbonat, das für derartige Träger verwendet wird, zu erreichen. Im gegenwärtigen Schrifttum wird festgestellt, daß beispielsweise Bisphenol-A-polykarbonat ein gut geeigneter Werkstoff für derartige magnetooptische Plattenträger ist. Hierzu wird auf die Schriftstelle "Retardation Effects in Magneto-optic Readout", Verfassser: Alan B. Marchant, SPIE Proceedings of Optical Mass Data Storage II (San Diego, CA, August 1986), S. 695 verwiesen.

In dieser Literaturstelle wird u.a. darauf hingewiesen, daß derartige Träger eine sehr kleine optische Verzögerung für normal einfallendes Licht besitzen, das Problem der Doppelbrechung jedoch auch bei diesen Trägern mit einer Erhöhung des Einfallswinkels in bezug auf die Normalrichtung wesentlich wird. In dieser Literaturstelle wird auch darauf hingewiesen, daß sogar die Vertikaldoppelbrechung derartiger Träger in einem Differentialdetektorsystem ein sehr wichtiges Problem darstellt.

In der Technologie der digitalen Audioplatten, die nur ausgelesen werden können, ist beispielsweise der Spritzguß eines geeigneten optischen Kunststoffes das geeignete Mittel, um mit höchster Wirtschaftlichkeit einen transparenten, gerillten Träger herzustellen. Dabei handelt es sich um das Verfahren, bei dem den Trägern Rillen und digitale Toninformation eingeprägt werden. Der wirtschaftliche Erfolg derartiger digitaler Audioplatten, die nur ausgelesen werden können, war Anlaß für Versuche, durch Spritzguß derartiger optischer Kunststoffe, wie Polymethylmethacrylat (PMMA) und Polycarbonat (PC), Träger für die Verwendung in magnetooptischen Aufzeichnungsplatten herzustellen. Jedoch führte die aus derartigen Spritzvorgängen resultierende Spannung zu Doppelbrechungsproblemen, wenn beispielsweise Polykarbonat als Material für die Träger derartiger magnetooptischer Aufzeichnungsplatten verwendet wird. Obwohl in bezug auf die Trägerdoppelbrechung mit PMMA-Material eine adäquate Wirksamkeit erzielt wird, besitzt dieses Material eine unerwünschte Wasserdampfdurchlässigkeit und dehnt sich in einer feuchten Umgebung aus. Diese Dimensionsinstabilität bewirkt das Reißen und Ablösen der dünnen magnetooptischen Aufzeichnungsstruktur.

Ungeachtet der durch die Doppelbrechung verursachten Probleme, wie sie in der Literatur beschrieben sind, werden die Versuche fortgesetzt, solche herkömmlichen Träger sowohl für das Aufbringen der dünnen magnetooptischen Aufzeichnungsstruktur als auch für den Durchgang des Schreib-und Lesestrahls zu und von der dünnen magnetooptischen Aufzeichnungsstruktur zu verwenden, wie dies beispielsweise in der Literaturstelle "Effect of Birefringence on Optical Memory Systems", Verfasser: Treves und Bloomberg, SPIE Proceedings of Optical Mass Data Storage II, San Diego, Californien, August 1986, beschrieben ist. In dieser Literaturstelle wird über derartige herkömmliche Träger berichtet und der Schluß gezogen, daß die optische Doppelbrechung überwacht werden muß, da eine erhebliche Reduzierung des Signal-zu-Rausch-Verhältnisses auf die Doppelbrechung des Trägers zurückzuführen ist. In der Literaturstelle "Analysis of Signal to Noise Ratio in Magneto-Optical Disk Using a Polarization Simulator", Verfasser: Toda et al., Topical Meeting on Optical Data Storage, Optical Society of America, Technical Digest Series, Vol. 10, S. 34 bis 37, 13. März 1987 (Stateline, Nevada, 3/11-13/87) werden solche herkömmlichen Träger gleichfalls beschrieben. Die Verfasser kommen zu dem Schluß, daß die Verzögerung eines PC-Trägers eine komplizierte Abhängigkeit von dem Einfallswinkels des Laserstrahls zeigt. Da die magnetooptische Aufzeichnung, ähnlich wie alle optischen Aufzeichnungsverfahren, ein fokussiertes Lichtbündel zum Einschreiben und Auslesen verwendet und da fokussierte Lichtbündel Strahlen aller denkbaren Einfallswinkel außerhalb eines Begrenzungswinkels einschließen, der durch die numerische Apertur der Objektivlinse für die Aufzeichnung vorgegeben wird, ist das Auslesen der magnetooptischen Signale durch die PC-Träger gegenüber diesen Effekten anfällig.

Die fortgesetzten Versuche über die Verwendung solcher herkömmlichen Träger zum Durchführen der voranstehend erwähnten Mehrfachfunktion des Abstützens der dünnen magnetooptischen Aufzeichnungsstruktur und des Strahldurchgangs ignorieren offensichtlich die Offenbarungen, die sich auf verschiedene Arten der optischen, nicht jedoch der magnetooptischen Aufzeichnung, beziehen. Bei diesen anderen Arten der optischen Aufzeichnung beeinflussen physikalische Änderungen, wie das Aufschmelzen oder Verdampfen, oder chemische Änderungen, wie Zersetzungen, die Aufzeichnungsfunktion. Bei einer Art einer derartigen Aufzeichnung durch physikalische Änderungen unter Verwendung von abtragbaren Medien zum einmaligen Einschreiben, wird die Ausbildung der Markierungen entweder durch das Auswölben von Material aus der Nachbarschaft der Markierung geschaffen oder dadurch, daß das Material sich aus dem Markierungsbereich in einen umgebenden Rand zurückzieht, oder durch beide Mechanismen. In jedem Fall ist eine freie, durch keinerlei Überlagerungsschicht bedeckte Fläche erforderlich oder von Nutzen.

In der Druckschrift US-A 4,074,282 ist ein abtragbares Aufzeichnungsmedium beschrieben, auf das Licht einfällt und das auf der Innenfläche einer Trägerscheibe aufgebracht ist, die eine von zwei Scheiben ist, zwischen denen sich ein Luftspalt befindet. Das Licht fällt auf die eine Scheibe auf und wird durch die andere hindurchgeleitet, die eine Fensterscheibe ist, durchquert den Luftspalt und trifft direkt auf das abtragbare Aufzeichnungsmedium auf. Aus der Offenbarung dieser Druckschrift ist zu entnehmen, daß es bei einer Anzahl von Situationen von Vorteil wäre, wenn das einfallende Licht durch die Trägerscheibe hindurchläuft und nicht durch die Fensterscheibe, da beispielsweise das abgetragene Material das Fenster beschichten kann. Die voranstehend beschriebene, herkömmliche Nutzung von Trägern in der magnetooptischen Aufzeichnung stimmt mit der Lehre dieser Druckschrift US-A 4,074,282 überein, so daß der Eindruck

EP 0 293 797 B1

entsteht, daß die herkömmliche Verwendung von Substraten in der magnetooptischen Aufzeichnung und die zeitlich davor liegende Anwendung von Substraten gemäß der Druckschrift US-A 4,074,282 für eine nicht-magnetooptische Aufzeichnung jeweils den Einsatz des Trägers sowohl für das Abstützen bzw. Tragen als auch für die Strahldurchlässigkeitsfunktion lehren. Mit Bezug auf die voranstehenden Ausführungen ist jedoch anzumerken, daß diese Lehren die wesentlichen, ungelösten Probleme in bezug auf die Doppelbrechung nicht lösen, die die gesamte Wirksamkeit solcher magnetooptischen Aufzeichnungsplatten beeinträchtigt.

Aufgabe der Erfindung ist es, eine magnetooptische Aufzeichnungsplatte der eingangs beschriebenen Art so zu verbessern, daß die optische Verzögerung eines einfallenden Lichtstrahles minimal wird und das Signal-zu-Rausch-Verhältnis im Vergleich zu demjenigen bekannter Strukturen von löschbaren magnetooptischen Platten verstärkt wird.

Diese Aufgabe wird erfindungsgemäß durch eine magnetooptische Aufzeichnungsplatte nach den Merkmalen des Patentanspruchs 1 in der Weise gelöst, daß der Träger aus einem Material gefertigt ist, dessen Trageigenschaften unabhängig von dessen optischen Transparenzeigenschaften ausgewählt sind, wobei das erste Fenster aus einem Material besteht, das aus der Gruppe Polymethylmethacrylat, Polymethylpenten und Polyolefin ausgewählt ist.

Die weitere Ausgestaltung der Erfindung ergibt sich aus den Merkmalen der übrigen Patentansprüche.

Bei einer Aufzeichnungsplatte für die Aufnahme der Strahlungsintensitätsmodulation in Anwesenheit eines Magnetfeldes nach der Erfindung wird die Funktion des Trägers, die dünne magnetooptische Aufzeichnungsstruktur abzustützen, von der optischen Durchlässigkeit des Trägers getrennt, so daß der am besten geeignete Träger ohne Berücksichtigung der optischen Durchlässigkeitseigenschaften ausgewählt werden kann. Dementsprechend besitzt eine magnetooptische Aufzeichnungsplatte nach der Erfindung einen Träger, der eine sehr geringe, vernachlässigbare Doppelbrechung aufweist, wodurch die Platte verbesserte Signal-zu-Rausch-Verhältnisse in den Lesestrahlen aufweist, da weder der Schreibstrahl noch der Lesestrahl durch den Träger hindurchlaufen.

Bei der magnetooptischen Platte nach der Erfindung bildet der Träger zugleich den Abschluß bzw. den Boden der Platte, die dünne magnetooptische Aufzeichnungsstruktur die obere Fläche des Trägers, wobei diese obere Fläche ein Fenster aufweist, durch das die Aufzeichnungsstrahlung in Anwesenheit eines Magnetfeldes für die magnetooptische Aufzeichnung hindurchgeleitet wird.

Die Erfindung wird im folgenden anhand von zeichnerisch dargestellten Ausführungsbeispielen näher erläutert.

Es zeigen:

Fig. 1A     eine Schnittansicht einer ersten Ausführungsform einer Aufzeichnungsplatte nach der Erfindung zum Aufzeichnen von Information entsprechend der Strahlungsintensitätsmodulation in Anwesenheit eines Magnetfeldes, mit einer magnetooptischen Aufzeichnungsschicht zwischen einem Träger und einem Fenster,

Fig. 1B     eine vergrößerte Ansicht eines Teils der Aufzeichnugsplatte nach Fig. 1A, wobei diese Ansicht die magnetooptische Schicht zwischen Schutzschichten darstellt,

Fig. 2A     eine Schnittansicht eines Teils einer zweiten Ausführungsform einer Aufzeichnungsplatte nach der Erfindung zum Aufzeichnen von Information entsprechend der Strahlungsintensitätsmodulation in Anwesenheit eines Magnetfeldes, mit einem Abstandshalter in Gestalt eines transparenten Haftmittels zum Trennen eines Fensters von einem Träger,

Fig. 2B     eine vergrößerte Ansicht eines Teils der Aufzeichnungsplatte nach Figur 2A, wobei diese Ansicht eine dünne magnetooptische Aufzeichnungsstruktur zwischen dem Haftmittel und dem Träger darstellt,

Fig. 3A     eine Schnittansicht einer vierten Ausführungsform einer doppelseitigen magnetooptischen Aufzeichnungsplatte nach der Erfindung zum Aufzeichnen von Information entsprechend der Strahlungsintensitätsmodulation in Anwesenheit eines Magnetfeldes,

Fig. 3B     eine vergrößerte Ansicht eines Teils der doppelseitigen Aufzeichnungsplatte nach Figur 3A, und

Fig. 4     eine vergrößerte Ansicht einer dritten Ausführungsform einer magnetooptischen Aufzeichnungsplatte mit einer magnetooptischen Mehrschichtstruktur.

Bevor die erste bis vierte Ausführungsform der Erfindung detailliert beschrieben werden, ist zu diesen Ausführungsformen folgendes anzumerken.

Die erste Ausführungsform einer magnetooptischen Aufzeichnungsplatte zum Aufzeichnen von Information, entsprechend der Strahlungsintensitätsmodulation in Anwesenheit eines Magnetfeldes, spricht auf die einfallende Strahlung auf einer Einfallseite an. Die Aufzeichnungsplatte umfaßt löschbares Material für die magnetooptische Aufzeichnung, das auf eine derartige intensitätsmodulierte Strahlung und auf das Magnet-

4

feld anspricht. Es ist ein Träger vorhanden, zum Abstützen des löschbaren magnetooptischen Materials auf der Seite des Materials, die von der Einfallseite der Aufzeichnungsplatte abgewandt ist. Der Träger ist aus einem Material gefertigt, das bevorzugte Trageigenschaften besitzt, die jedoch ohne Berücksichtigung der optischen Durchlässigkeitseingenschaften des Materials ausgewählt sind. Eine Tragstruktur liegt auf zumindest einem Teil des Trägers auf, um zumindest eine Stützfläche zu schaffen, die von dem löschbaren magnetooptischen Material beabstandet ist. Ein Fenster ist auf der Stützfläche befestigt und bildet einen Luftspalt auf der Seite des löschbaren magnetooptischen Materials, die der Einfallseite der Aufzeichnungsplatte zugewandt ist. Das Fenster hat ebene Flächen und ist aus einem Material gefertigt, das optisch transparent ist und das minimale, vernachlässigbare Doppelbrechung aufweist, so daß die auf der Einfallseite der Aufzeichnungsplatte einfallende Strahlung durch das Fenster mit minimaler optischer Verzögerung hindurchgeleitet wird und nicht durch den Träger selbst, bevor diese Strahlung auf das löschbare Material für die magnetooptische Aufzeichnung in Anwesenheit des Magnetfeldes auftrifft.

Auch bei der zweiten Ausführungsform fällt die Strahlung auf einer Einfallseite der Aufzeichnungsplatte ein. Die zweite Ausführungsform stimmt in wesentlichen Teilen mit der ersten Ausführungsform überein und umfaßt ebenfalls einen Träger und ein Fenster, das zugleich die Einfallseite der Aufzeichnungsplatte bildet. Das Fenster ist eben augestaltet und aus einem Material hergestellt, das optisch transparent ist und minimale, vernachlässigbare Doppelbrechung aufweist, so daß die einfallende Strahlung zuerst das Fenster mit minimaler optischer Verzögerung durchstrahlt. Ein transparentes Haftmittel, wie beispielsweise optischer Zement, befindet sich zwischen der Fläche des Fensters, die der Einfallseite der Aufzeichnungsplatte gegenüberliegt, und einer dünnen magnetooptischen Aufzeichnungsstruktur, die auf dem Träger aufgebracht ist, Die dünne magnetooptische Aufzeichnungsstruktur umfaßt eine magnetooptische Schicht, die zwischen einer Transparentschicht und einer Schutzschicht eingeschlossen ist. Die Schutzschicht liegt zwischen dem Träger und der magnetooptischen Schicht, und die Transparentschicht überdeckt die magnetooptische Schicht und ist benachbart sowohl zu der magnetooptischen Schicht als auch dem transparenten Haftmittel. Die optische Transparentschicht und die Schutzschicht sind aus einem hermetischen Material gefertigt, und die Aufzeichnung erfolgt auf der magnetooptischen Schicht, ansprechend auf Strahlungsintensitätsmodulation in Anwesenheit eines Magnetfeldes. Auf dem Träger sind die Schutzschicht und die übrigen verbleibenden Schichten der Platte aufgebracht. Der Träger ist aus einem Material hergestellt, das verbesserte Filmstützeigenschaften und Feuchtigkeitsundurchlässigkeitscharakteristiken besitzt, d.h. Dimensionsstabilität, ohne Berücksichtigung der optischen Durchlässigkeitseigenschaften, da die intensitätsmodulierte Strahlung nicht den Träger durchstrahlt.

Bei einer dritten Ausführungsform der Erfindung ist die löschbare magnetooptische Schicht in eine abgestimmte Mehrschichtstruktur eingebaut, zum weiteren Verstärken und Optimieren der Differenz des effektiven Kerr-Winkels der Polarisationsdrehung entsprechend den unterschiedlichen, nach oben oder unten gerichteten Magnetisierungen der magnetooptischen Aufzeichnungsschicht. Bei der abgestimmten Mehrschichtstruktur handelt es sich um eine Vierschichtstruktur, die eine Reflexionsschicht, die auf dem Träger aufliegt, eine Transparente dielektrische Schutzschicht zum Abstandeinhalten, welche auf der Reflexionsschicht aufliegt, eine magnetooptische Aufzeichnungsschicht über der Schutzschicht und eine transparente dielektrische Schutzschicht als oberste Schicht umfaßt, die die magnetooptische Aufzeichnungsschicht überdeckt. Eine vierte Ausführungsform der Erfindung umfaßt zwei Aufzeichnungsplatten gemäß der ersten, zweiten oder dritten Ausführungsform, wobei die Träger Rücken an Rücken aneinanderliegen oder zu einem gemeinsamen Träger zusammengefaßt sind, um eine doppelseitige magnetooptische Aufzeichnungsplatte zu bilden.

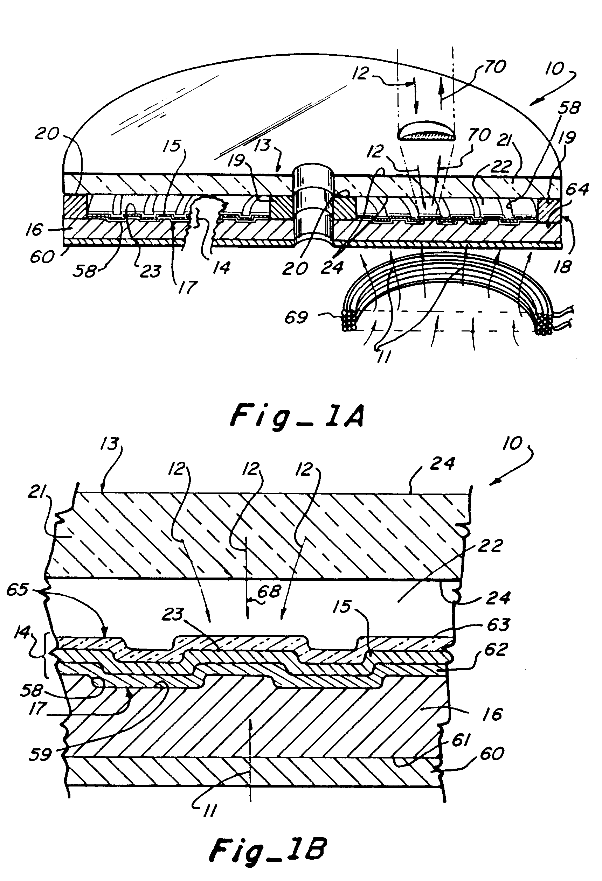

Die erste Ausführungsform der Erfindung ist in Fig. 1A als eine Aufzeichnungsplatte 10 zum Aufzeichnen in Anwesenheit eines Magnetfeldes 11 und ansprechend auf die Intensitätsmodulation einer Strahlung, wie beispielsweise eines Laser-Schreibstrahls 12 dargestellt. Die Aufzeichnungsplatte 10 zeichnet die Inforamtion des Schreibstrahls 12 auf, der auf eine Einfallseite 13 auftrifft. Die Aufzeichnungsplatte 10 umfaßt eine dünne filmartige magnetoopische Aufzeichnungsstruktur 14, die u.a. eine magnetooptische Aufzeichnungsschicht 15 aus einem löschbaren Material für die magnetooptische Aufzeichnung beinhaltet. Auf einem Träger 16 ist die dünne magnetooptische Aufzeichnungsstruktur 14 auf einer Seite 17 aufgebracht, die der Einfallseite 13 der Aufzeichnungsplatte 10 gegenüberliegt. Der Träger 16 ist aus einem Material gefertigt, das ausgezeichnete Trageigenschaften besitzt, die ohne Berücksichtigung der optischen Durchlässigkeitseigenschaften ausgewählt sind. Eine Stützstruktur 18 in Gestalt von koaxialen Dichtungsringen 19-19 liegt zumindest auf einem Teil des Trägers 16 auf und bildet eine Stützfläche 20, die von der löschbaren magnetooptischen Aufzeichnungsschicht 15 beabstandet ist. Ein Fenster 21 ist auf den Trägerflächen 20 der koaxialen Dichtungsringe 19-19 befestigt und bildet einen Luftspalt 22 zwischen einer Seite 23 der löschbaren magnetooptischen Aufzeichnungsschicht 15 und der Einfallseite 13 der Aufzeichnungsplatte 10. Das Fenster 21 weist ebene Flächen 24-24 auf und ist aus einem Material gefertigt, das optisch

EP 0 293 797 B1

transparent ist und minimale vernachlässigbare Doppelbrechung besitzt, so daß der auf die Einfallseite 13 der Aufzeichnungsplatte 10 auftreffende Schreibstrahl 12 durch das Fenster 21 mit minimaler optischer Verzögerung hindurchgeleitet wird und nicht den Träger 16 durchsetzen muß, bevor der Strahl auf die löschbare magnetooptische Aufzeichnungsschicht 15 auftrifft.

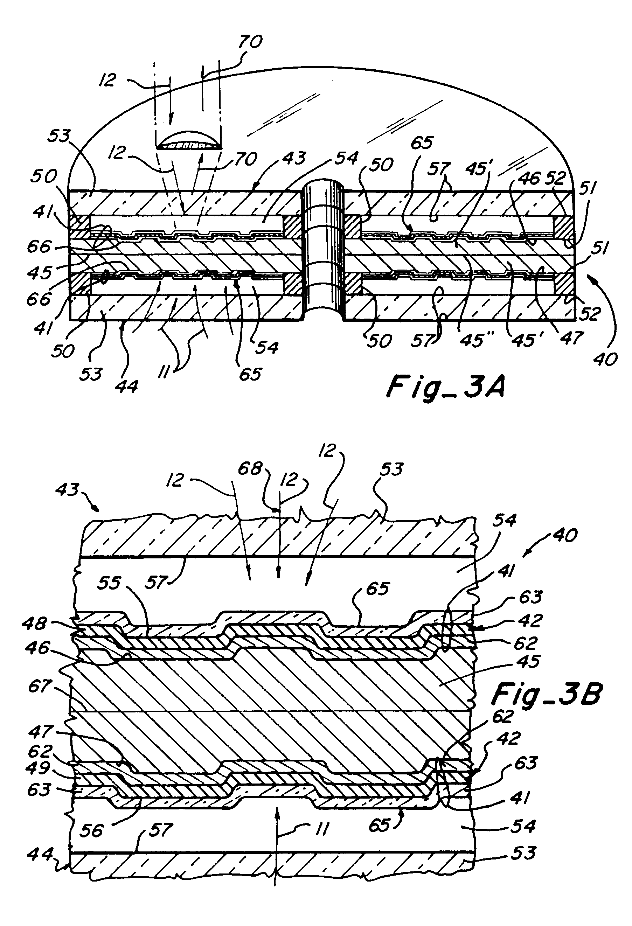

Die zweite Ausführungsform der Erfindung, wie sie in den Figuren 2A und 2B dargestellt ist, ist als eine Aufzeichnungsplatte 25 ausgebildet, auf der die eingestrahlte Information, ansprechend auf die Intensitätsmodulation des Schreibstrahls 12 in Anwesenheit des Magnetfeldes 11 eingeschrieben wird, wobei der Schreibstrahl 12 auf eine Einfallseite 13' der Aufzeichnungsplatte 25 eingestrahlt wird. Die Aufzeichnungsplatte 25 umfaßt einen Träger 26 und ein Fenster 27, das die Einfallseite 13' der Aufzeichnungsplatte 25 bildet. Das Fenster 27 ist eben und aus einem Material hergestellt, das optisch transparent ist und minimale, vernachlässigbare Doppelbrechung besitzt, so daß der einfallende Schreibstrahl 12 zuerst mit minimaler optischer Verzögerung hindurchgeleitet wird. Ein transparentes Klebemittel 28, wie beispielsweise optischer Zement, ist zwischen einer Fläche 29 des Fensters 27, die der Einfallseite 13' der Aufzeichnungsplatte 25 gegenüberliegt, und einer dünnen filmartigen magnetooptischen Aufzeichnungsstruktur 30 auf dem Träger 26 aufgebracht. Die dünne filmartige magnetooptische Aufzeichnungsstruktur 30 umfaßt eine magnetooptische Aufzeichnungsschicht 31, die sandwichartig zwischen einer transparenten oberen Schutzschicht 32 und einer unteren Schutzschicht 33 eingeschlossen ist. Die untere Schutzschicht 33 befindet sich zwischen dem Träger 26 und der magnetooptischen Aufzeichnungsschicht 31, während die transparente obere Schutzschicht 32 auf der magnetooptischen Aufzeichnungsschicht 31 aufliegt und somit sowohl an die magnetooptische Aufzeichnungsschicht 31 als auch an das transparente Klebemittel 28 angrenzt. Die optisch transparente Schutzschicht 32 und die Schutzschicht 33 bestehen aus einem hermetisch dichten Material. Die magnetooptische Aufzeichnungsschicht 31 spricht auf den Schreibstrahl 12 in Anwesenheit des Magnetfeldes 11 an, um die Intensitätsmodulation des Schreibstrahls 12 aufzuzeichnen. Der Träger 26 stützt die untere Schutzschicht 33 sowie die übrigen Schichten der Aufzeichnungsplatte 25 ab. Der Träger 26 besteht aus einem Material, das ausgezeichnete Filmtrageigenschaften und Feuchtigkeitsundurchlässigkeitscharakteristiken besitzt, ohne Berücksichtigung der optischen Durchlässigkeitseigenschaften, da diese insofern keine Rolle spielen, als der Schreibstrahl den Träger 26 nicht durchsetzt.

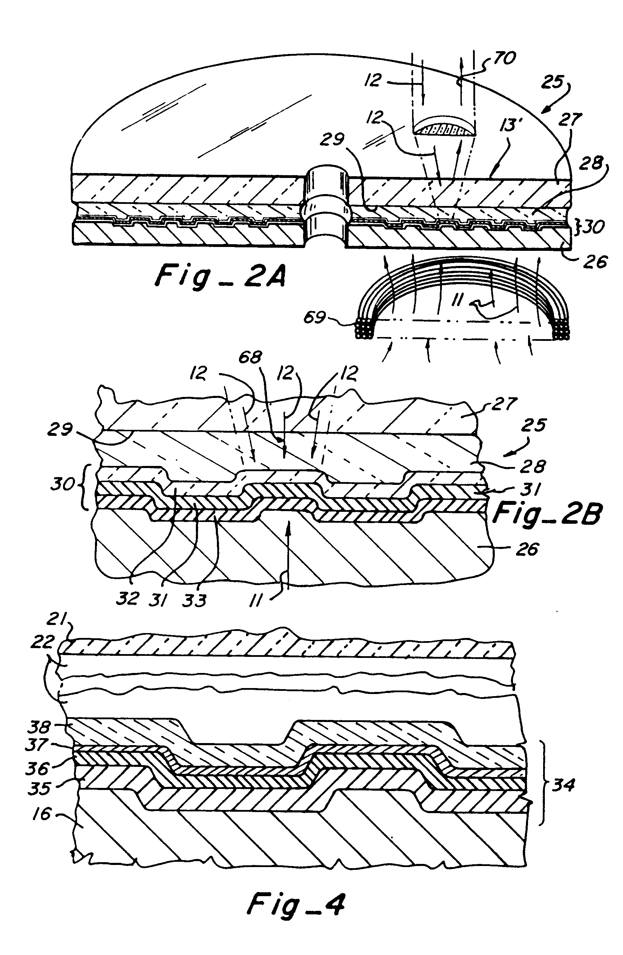

Die dritte Ausführungsform der Erfindung ist in Figur 4 dargestellt und umfaßt u.a. eine abgestimmte Mehrschichtstruktur 34 anstelle der dünnen filmartigen Aufzeichnungsstrukturen 14 und 30 der entsprechenden Aufzeichnungsplatten 10 und 25 und anstelle der vergleichbaren dünnen Aufzeichnungsstruktur der vierten Ausführungsform, die in den Figuren 3A und 3B gezeigt ist. Anders als bei derartigen Strukturen, enthält die Mehrschichtstruktur 34 eine Reflexionsschicht 35, die unmittelbar auf dem Träger 16 wie in der ersten Ausführungsform aufgebracht ist, um den einfallenden Schreibstrahl zu reflektieren. Eine transparente, dielektrische Schutzschicht 36, die auch als Abstandshalter wirkt, liegt auf der Reflexionsschicht 35 auf. Eine löschbare magnetooptische Aufzeichnungsschicht 37, ähnlich derjenigen der ersten Ausführungsform, ist auf der Schutzschicht 36 aufgebracht. Eine obere Schutzschicht 38 aus transparentem, dielektrischem Material liegt auf der magnetooptischen Aufzeichnungsschicht 37 auf. Die Dicken der Schichten 35, 36, 37 und 38 der Interferenz-Mehrschichtstruktur 34 sind so gewählt, daß die Mehrschichtstruktur 34 so abgestimmt ist, daß sie die Differenz des effektiven Kerr-Winkels der Polarisationsdrehung entsprechend den unterschiedlichen Richtungen der Magnetisierung, die nach oben oder nach unten gerichtet sind, der magnetooptischen Aufzeichnungsschicht 37 verstärken und optimieren. Wird die Mehrschichtstruktur 34 auf dem Träger 16 der ersten Ausführungsform der Aufzeichnungsplatte 10 aufgebracht, wird das Trägermaterial ohne Berücksichtigung der optischen Durchlässigkeitscharakteristiken ausgewählt, da der intensitätsmodulierte Schreibstrahl 12 nicht den Träger 16 durchstrahlt.

Die vierte Ausführungsform einer Aufzeichnungsplatte ist in den Figuren 3A und 3B als doppelseitige optische Aufzeichnungsplatte 40 dargestellt, die zwei dünne filmartige magnetooptische Aufzeichnungsstrukturen 41-41 enthält. Jede der beiden Strukturen 41-41 umfaßt eine magnetooptische Aufzeichnungsschicht 42-42 aus löschbarem magnetooptischem Material zum Aufzeichnen der Information in Anwesenheit eines Magnetfeldes 11, ansprechend auf die Intensitätsmodulation der Strahlung, die auf die entsprechende erste oder zweite Einfallseite 43 bzw. 44 der Aufzeichnungsplatte 40 auffällt.

Die Aufzeichnungsplatte 40 umfaßt desweiteren einen Träger 45, der die doppelten dünnen filmartigen magnetooptischen Aufzeichnungsstrukturen 41-41 auf einander gegenüberliegenden Seiten 46 und 47 trägt, so daß die als obere Schicht 48 gezeigte magnetooptische Aufzeichnungsschicht 42 (Fig. 3B) gegen die erste Einfallseite 43 der Aufzeichnungsplatte 40 gewandt ist und die als untere Schicht 49 (Fig. 3B) gezeigte magnetooptische Aufzeichnungsschicht 42 gegen die zweite Einfallseite 44 der Aufzeichnungsplatte 40 gewandt ist. Der Träger 45 ist aus einem Material hergestellt, das Trageigenschaften besitzt, die unter Vernachlässigung der optischen Durchlässigkeitseigenschaften des Materials ausgewählt sind. Eine Stützstruktur aus Abstandsringen 50-50 liegt auf zumindest einem Teil 51 (Fig. 3A) jeder der einander

6

gegenüberliegenden Seiten 46 und 47 des Trägers 45 auf, um Stützflächen 52-52 (Fig. 3A) zu schaffen, die von jeder der beiden löschbaren magnetooptischen Aufzeichnungsschichten 42-42 beabstandet sind. Fenster 53-53 sind auf den Stützflächen 52-52 befestigt, um einen Luftspalt 54 zwischen einer Seite 55 (Fig. 3B) der oberen Schicht 48 und der ersten Einfallseite 43 der Aufzeichnungsplatte 40 und einen weiteren Luftspalt 54 zwischen einer Seite 56 der unteren Schicht 49 und der zweiten Einfallseite 44 der Aufzeichnungsplatte 40 zu schaffen. Die Fenster 53-53 weisen ebene Flächen 57 auf und sind aus einem Material gefertigt, das optisch transparent ist und minimale Doppelbrechung besitzt, so daß der einfallende Schreibstrahl 12 die Fenster mit minimaler optischer Verzögerung durchstrahlt. Die dünnen filmartigen magnetooptischen Aufzeichnungsstrukturen 41-41 können beispielsweise die Gestalt der Interferenz-Mehrschichtstruktur 34 der dritten Ausführungsform aufweisen. Desweiteren können die Luftspalte 54-54 durch das transparente Klebemittel 28 der zweiten Ausführungsform ersetzt sein, je nachdem, welche Betriebseigenschaften für die doppelseitige Aufzeichnungsplatte 40 erwünscht sind.

Der Träger 16 der in den Fig. 1A und 1B gezeigten Aufzeichnungsplatte 10 hat die Gestalt einer Festplatte aus einem Material, dessen Wärme- und Feuchtigkeitsausdehnungskoeffizienten vergleichbar sind mit denjenigen der dünnen filmartigen magnetooptischen Aufzeichnungsstruktur 14. Wesentlich ist, daß die Festigkeits- und Ausdehnungscharakteristiken des Materials des Trägers 16 ohne Berücksichtigung der optischen Durchlässigkeitscharakteristiken ausgewählt werden können, da der einfallende Schreibstrahl 12 nicht durch den Träger 16 hindurchgeleitet wird. Zusätzlich wird das Material des Trägers 16 in Hinblick auf seine Eigenschaften so ausgewählt, daß es für das Anbringen von Rillen 58 oder anderen eingeprägten Merkmalen für die Spurführung geeignet ist. In einer Ausführungsform der Aufzeichnungsplatte 10 ist der Träger 16 aus einem Polykarbonatmaterial gefertigt, das im Spritzguß hergestellt wird, um die Rillen 58 zu formen. Derartige Träger 16 sind bekannt und haben beispielsweise einen Durchmesser von 130 mm, eine Dicke von 1,2 mm und einen Abstand von 1,6 $\mu$m der Rillen 58 voneinander. Wie aus den Fig. 1A und 1B ersichtlich ist, sind die Rillen 58 an der oberen Seite 59 des Trägers 16 angebracht, die der Einfallseite 13 der Aufzeichnungsplatte 10 zugewandt ist, auf welche der Schreibstrahl 12 einfällt.

Zusätzlich ist eine Schicht 60 aus hermetisch dichtem Material auf der unteren Seite 61 des Trägers 16 aufgebracht. Die untere Seite 61 liegt der Einfallseite 13 gegenüber, auf die der Schreibstrahl 12 auffällt, so daß das hermetisch dichte Material ohne Berücksichtigung der optischen Durchlässigkeitseigenschaften ausgewählt werden kann. Somit kann das Material der hermetisch dichten Schicht 60 ein Metall sein, wie beispielsweise Aluminium.

Wie Fig. 1B im Detail zeigt, befindet sich die dünne filmartige magnetooptische Aufzeichnungsstruktur 14 auf der gerillten oberen Seite 59 des Trägers 16. Die Aufzeichnungsstruktur 14 umfaßt eine untere Schutzschicht 62, die an die Seite 59 des Trägers 16 angrenzt. Die Schutzschicht 62 besteht aus einem Material, das im Hinblick auf seine Eigenschaften der hermetischen Abdichtung und großer Adhäsion für das Material des Trägers 16 ausgewählt wird. Da der Schreibstrahl 12 nicht durch die Schutzschicht 62 hindurchgeleitet wird, erfolgt die Auswahl des Materails für die untere Schutzschicht 62 ohne Berücksichtigung der optischen Durchlässigkeitseigenschaften des Materials. In einer Ausführungsform der Aufzeichnungsplatte 10 besteht die untere Schutzschicht 62 aus Siliziumnitrid mit einer Dicke von etwa 90 nm.

Die löschbare magnetooptische Aufzeichnungsschicht 15 ist auf der Schutzschicht 62 aufgebracht. Zum Aufzeichnen der Information durch den Schreibstrahl 12 und Nutzung des Kerr-Effekts, besteht die magnetooptische Aufzeichnungsschicht 15 aus einer Legierung Seltener Erden und Übergangsmetallen. Beispiele für derartige Materialien sind in dem US-Patent 3,949,387 beschrieben. Insobesondere können derartige Legierungen aus den Gruppen ausgewählt werden, die aus den Elementen Terbium, Eisen und Kobalt; Gadolinium, Terbium und Eisen; Gadolinium, Terbium, Eisen und Kobalt; und Terbium und Kobalt besteht. Derartige Legierungen können aus diesen Gruppen gebildet werden, wobei jede dieser Gruppen desweiteren noch ein oder mehrere Elemente aus der Gruppe, bestehend aus Platin, Titan und Chrom, enthalten kann. In einer Ausführungsform der Aufzeichnungsplatte 10 besteht die Legierung aus Seltenen Erden und Übergangsmetallen für die magnetooptische Aufzeichnungsschicht 15 aus Terbium, Eisen und Kobalt, mit einem Zusatz von Platin. Die Dicke der Legierungsschicht beträgt 90 nm ± 10 %. Die Legierung wird beispielsweise auf die untere Schutzschicht 62 durch Zerstäuben in bekannter Weise niedergeschlagen. Aus Fig. 1B ist desweiteren ersichtlich, daß die dünne filmartige magnetooptische Aufzeichnungsstruktur 14 eine optische transparente Schicht 63 enthält, die auf der magnetooptischen Aufzeichnungsschicht 15 aufgebracht ist. Die transparente Schicht 63 wird in Hinblick auf ihre Eigenschaften bezüglich der optischen Transparenz, eines hohen Brechungskoeffizienten und der hermetischen Abdichtung ausgewählt. In einer Ausführungsform der Aufzeichnungsplatte 10 besteht die optische transparente Schicht 63 aus Siliziumnitrid mit einer Dicke von 90 nm ± 10 %.

Die Stützstruktur 18 in Fig. 1A besteht aus koaxialen Dichtungsringen 19-19, die ringförmig und konzentrisch angeordnet sind. Die Dichtungsringe 19-19 liegen auf Ringbereichen 64 (Fig. 1A) des Trägers 16 auf. Auf den Dichtungsringen 19-19 sind Stützflächen 20 vorhanden, die das Fenster 21 abstützen und im Abstand von einer Seite 65 (Fig. 1B) der optischen transparenten Schicht 63 halten, um so den Luftspalt 22 zu bilden. Die Dichtungsringe 19-19 sind im allgemeinen direkt mit den Ringbereichen 64 des Trägers 16 verbunden. Die entsprechenden Teile der magnetooptischen Aufzeichnungsschicht 15 und der Schichten 62 und 63 werden für diesen Zweck während des Niederschlags der magnetooptischen Schicht abgedeckt. Die Dichtungsringe 19-19 bestehen aus einem Material mit einer gleichmäßigen, jedoch nicht kritischen Dicke von 0,05 bis 0,5 mm in die Richtung, in der der Schreibstrahl 12 auf die Einfallseite 13 der Aufzeichnungsplatte 10 auftrifft. Sind die Materialien, aus denen das Fenster 21 und der Träger 16 gefertigt sind, erheblich unterschiedlich in bezug auf ihre Ausdehnung, insbesondere auf ihre Wärmeausdehnung, so werden die Dichtungsringe 19-19, die zugleich Abstandsringe sind, insbesondere der Außenring 19, aus einem federnden Elastomermaterial hergestellt.

Der Luftspalt 22 zwischen der oberen Seite 65, der optisch transparenten Schicht 63 und der ebenen Bodenfläche 24 des Fensters 21 hat eine Dicke zwischen 0,05 und 0,5 mm. Ein Vorteil des Luftspalts 22 in der magnetooptischen Aufzeichnungsplatte besteht darin, daß der Fresnel Reflexionskoeffizient, der der Grenzfläche Luft/Transparentschicht zugeordnet ist, im Vergleich zu dem Koeffizienten einer Grenzfläche Kunststoffträger/Schutzschicht größer ist. Der Fresnel Koeffizient für Grenzflächen zwischen nicht absorbierenden Dielektrika wird gemäß der Beziehung (n0-n1)/(n0+n1) bestimmt, mit den Brechungskoeffizienten n0 und n1 zu beiden Seiten der Grenzfläche. Da der Brechungskoeffizient von Luft etwa gleich 1,0 ist und wesentlich niedriger als der Brechungskoeffizient für Kunststoff, der etwa in der Größenordnung von 1,5 liegt, ist die Größe des Fresnel Reflexionskoeffizienten an einer Grenzfläche Luft/Dielektrikum wesentlich größer als an einer Grenzfläche Kunststoff/Dielektrikum. Daraus resultiert eine bessere Antireflexionsbedingung und somit eine bessere "Aufweitungs "Verstärkung des Kerr-Effekts und des Wiedergabesignals für den Lichteinfall in den Luftspalt im Vergleich zu dem Lichteinfall auf den Träger. Die Erscheinung des Aufweitens wird in der Literaturstelle "Magnetic Domains and Techniques for their Observation", Verfasser: R. Carey und E.D. Isaac, Academic Press, 1963, S. 67 diskutiert.

"Optisch glatte" Flächen von Trägern besitzen einen gewissen Grad von Mikro-Rauheit. Eine derartige Mikro-Rauheit wird im allgemeinen durch den Mittenrauhwert der Fläche ausgedrückt, bei dem es sich um den arithmetischen Mittelwert der absoluten Beträge der Abstände des Rauheitsprofils von der mittleren Linie innerhalb der Meßstrecke handelt. Dies ist gleichbedeutend mit der Höhe eines Rechtecks, dessen Länge gleich der Gesamtmeßstrecke ist und das flächengleich mit der Summe der zwischen Rauheitsprofil und mittlerer Linie eingeschlossenen Flächen ist.

Der Mittenrauhwert kann auch durch die sogenannte "r.m.s.-Abweichung" (root mean square deviation) des tatsächlichen Flächenprofils von einer idealen, vollkommen glatten ebenen Fläche ausgedrückt werden.

Diese Mikro-Rauheit kann nach verschiedenen Methoden gemessen werden. Eine herkömmliche Methode besteht in der Messung der "totalen integrierten Streuung" (TIS) der von der Oberfläche reflektierten Strahlung, wie diese zum Beispiel in dem Artikel "Comparison of Techniques for Measuring the Roughness of Optical Surfaces", Verfasser: Jean M. Bennett, Optical Engineering, Vol. 24, Nr. 3 (Mai-Juni 1985), S. 380 bis 385 unter den dort zitierten Referenzen beschrieben ist.

Die durch die Mikro-Rauheit induzierte Streuung ist eine der Quellen für das Rauschen in einem Signal, das von einer optischen Platte erhalten wird. Für eine bestimmte Rauheit der Trägerfläche ist das durch diese Rauheit verursachte Rauschen im Signal bei einer Einstrahlung in Luft der auf die dünne Aufzeichnungsstruktur 14 auftreffenden Strahlung erheblich geringer als für das Einstrahlen auf einen Träger einer derartigen Aufzeichnungsstruktur 14, gemäß dem Stand der Technik. Gemäß der voranstehend angeführten Referenz von Bennett gilt insbesondere für die total integrierte Streuung TIS die Beziehung TIS $= (4\pi\delta/\lambda)^2$, in der $\delta$ der Mittenrauhwert ist, $\lambda$ die Wellenlänge der Strahlung und TIS der gesamte Streuanteil an der reflektierten Strahlung. In einem Medium mit dem Brechungsindex n ergibt sich die optische Dicke $\delta$ für eine vorgegebene Streuflächenversetzung zu $n\delta$, mit der Wellenlänge $\lambda/n$. In einem Medium mit dem Brechungsindex n wird somit

$$(TIS)_n = [(4\pi n\delta)(\lambda/n)]^2 = n^4(4\pi\delta/\lambda)^2 = n^4(TIS)_{Luft}.$$

Aus der obigen Beziehung folgt, daß die Lichtstreuung bzw. die Streuung der Strahlung an einer vorgegebenen Oberfläche um den Faktor $n^4$ niedriger ist, wenn der Lichteinfall über die Trägerseite im Vergleich zu dem Lichteinfall über die Luftseite erfolgt. In dem Ausmaß, in welchem die Mikro-Rauheit ein Faktor in der Bestimmung des Signal-zu-Rausch-Verhältnisses eines Signals ist, das von einer magnetooptischen Aufzeichnungsplatte ausgelesen ist, ist es günstiger, für den optischen Strahl die Aufzeichnungsstruktur von einer Luftumgebung aus zu adressieren bzw. zu beschreiben als von einer Trägerumgebung aus. Da der Luftspalt 22 an die obere Fläche 65 der transparenten Schicht 63 angrenzt, wird der Einfluß der Mikro-Rauheit in den magnetooptischen Aufzeichnungsplatten 10 oder 40 reduziert.

Wie in Fig. 1A gezeigt, ist das Fenster 21 an den Stützflächen 20 der Dichtungsringe 19-19 befestigt. Das Fenster 21 einschließlich der ebenen Flächen 24 besitzt optimale optische Durchlässigkeitseigenschaften. Das Fenster 21 ist aus einem Material gefertigt, das optisch transparent ist und minimale Doppelbrechung aufweist, so daß der einfallende Schreibstrahl 12 durch das Fenster 21 mit minimaler optischer Verzögerung hindurchgeleitet wird. Derartige Eigenschaften liefern beispielsweise Polymethylmethacrylat, Polymethylpenten und Polyolefin. In einer Ausführungsform der Aufzeichnungsplatte 10 ist das Fenster 21 aus chemisch gehärtetem Glas gefertigt und hat einen Durchmesser von 130 mm und eine Dicke von 1,2 mm. Derartige Fenster sind bekannt und auf dem Markt erhältlich. Als Ergebnis einer derartigen chemischen Härtung befinden sich die ebenen Flächen 24 in einem Zustand der Druckspannung, durch den die gewünschte minimale Doppelbrechung erhalten bleibt.

Vor dem Niederschlagen der dünnen Filmschichten, welche die hermetisch abdichtende Schicht 60 auf der unteren Fläche 61 des Trägers 16 und die dünne magnetooptische Aufzeichnungsstruktur 14 auf der gerillten, oberen Seite 59 des Trägers 16 bilden, werden die Flächen 59 und 61 des Trägers 16 einer Ionenbestrahlung ausgesetzt, um eine gute Adhäsion dieser Filme sicherzustellen.

Die in den Fig. 3A und 3B dargestellte doppelseitige Aufzeichnungsplatte 40 umfaßt den Träger 45, auf dem Rillen 66, ähnlich den Rillen 58 auf dem Träger 16, vorhanden sind. Der Träger 45 kann als ein integrales Spritzgußteil oder in Gestalt von zwei Gußteilen 45' (Fig. 3A) ausgeformt sein, die entlang einer Linie 45'' zusammengefügt sind. Jedes Teil 45' ist ähnlich dem Träger 16 der Aufzeichnunsplatte 10 ausgebildet. Die Aufzeichnungsplatte 40 ist symmetrisch in bezug auf eine Ebene 67 (Fig. 3B), die parallel zu der ersten und zweiten Einfallseite 43 bzw. 44 der Aufzeichnungsplatte 40 verläuft. Die Einfallseiten 43 und 44 sind gleichartig aufgebaut und funktionieren in der gleichen Weise, daher gilt die Beschreibung der einen der beiden Einfallseiten auch für die andere Einfallseite.

Jede der zweifach vorhandenen dünnen filmartigen magnetooptischen Aufzeichnungsstruktur 41-41 auf dem Träger 45 ist ähnlich zu der dünnen filmartigen magnetooptischen Aufzeichnungsstruktur 14 der Aufzeichnungsplatte 10 und umfaßt die untere Schutzschicht 62 und die optisch transparente Schicht 63, wie sie auf der Aufzeichnungsplatte 10 vorhanden sind. Die magnetooptische Aufzeichnungsschicht 42 der Aufzeichnungsstruktur 41-41 ist die gleiche wie die magnetooptische Aufzeichnungsschicht 15 gemäß dem ersten Ausführungsbeispiel der Erfindung. Desweiteren gilt, daß die Stützstruktur bzw. die Abstandsringe 50-50, dargestellt in Fig. 3A, ähnlich den Dichtungsringen 19-19 auf der Aufzeichnungsplatte 10 augestaltet sind. Die Abstandsringe 50-50 bilden somit den Luftspalt 54, der die gleichen Vorteile wie der Luftspalt 22 der Aufzeichnungsplatte 10 liefert. Die Abstandsringe 50-50 stützen die Fenster 53-53, die einander gegenüberliegen, in bezug auf die obere Fläche 65 der transparenten Schicht 63, in einer Weise ähnlich den Dichtungsringen 19-19 der Aufzeichnungsplatte 10 ab. Die Abstandsringe 50-50 sind dicht auf dem Träger 45 aufgebracht, um den Luftspalt 54 als einen kreisringförmigen Raum zu bilden. Desweiteren gilt, daß jedes der Fenster 53-53 aus einem Material gefertigt ist, das aufgrund der gewünschten optischen Durchlässigkeitseigenschaften ausgewählt wird, in der gleichen Weise, wie bei dem Fenster 21 der Aufzeichnungsplatte 10 vorgegangen wird. Es ist selbstverständlich, daß die Aufzeichnungsplatte 40 die Möglichkeit bietet, die Aufzeichnung von beiden Einfallseiten 43 und 44 vorzunehmen, wodurch die Menge an gespeicherten Daten auf der Aufzeichnungsplatte 40 gesteigert wird.

Die in den Figuren 3A und 3B dargestellte Aufzeichnungsplatte 40 kann wahlweise auch mit der abgestimmten Interferenz-Mehrschichtstruktur 34 gemäß Fig. 4 anstelle der dünnfilmigen magnetooptischen Aufzeichnungsstruktur 41-41 ausgestattet werden. Die Vorteile einer derartigen Mehrschichtstruktur 34 werden nachstehend noch näher beschrieben werden.

Der Träger 26 der Aufzeichnungsplatte 25, wie sie in den Figuren 2A und 2B gezeigt ist, wird nach den gleichen Kriterien wie der Träger 16 der Aufzeichnungsplatte 10 ausgewählt. Gleiches gilt für die transparente obere Schicht 32, die magnetooptische Aufzeichnungsschicht 31 und die untere Schutzschicht 33, die nach den gleichen Kriterien wie die entsprechende Schutzschicht 63, die magnetooptische Aufzeichnungsschicht 15 und die optisch transparente untere Schutzschicht 62 der Aufzeichnungsplatte 10 ausgewählt werden. Die transparente Klebemittelschicht 28 besteht beispielsweise aus einm UV-härtenden optischen Fotopolymer, das Eigenschaften wie ein optischer Zement besitzt und optisch transparent ist. Die Dicke der transparenten Klebemittelschicht 28 ist nicht kritisch, wird aber in der Größenordnung von 20 $\mu$m für die Aufzeichnungsplatte 25 gewählt. Das Fenster 27 klebt direkt auf der transparenten Klebemittelschicht 28 und wird nach den gleichen Kriterien ausgewählt wie die Fenster 21 und 53-53 der Aufzeichnungsplatten 10 und 40.

Anhand der Fig. 2A und 2B ist es ersichtlich, daß die Aufzeichnungsplatte 25 auch etliche der Vorteile der Aufzeichnungsplatten 10 und 40 beinhaltet. Insbesondere gilt, daß der Träger 26 der Aufzeichnungsplatte 25 nach den gleichen Gesichtspunkten ausgelegt wird, die maßgeblich für die Auslegung der Träger 16 und 45 der entsprechenden Aufzeichnungsplatten 10 und 40 Gültigkeit haben. Insbesondere sind die Funktionen des Trägers 26 von der Funktion des Fenster 27 getrennt, so daß ideale Eigenschaften des Trägers 26 in bezug auf seine Tragfunktionen erhalten werden können, ohne daß die optischen Durchlässigkeitseigenschaften des Trägers berücksichtigt werden müssen. Wegen dieser Trennung der Funktionen können in ähnlicher Weise die Eigenschaften des Fensters 27 unter dem Gesichtspunkt der optischen Durchlässigkeit ohne Doppelbrechung ausgewählt werden.

Dieser Vorteil übertrifft die Resultatsverbesserungen, die durch Eliminieren des Luftspaltes von der Aufzeichnungsplatte 25 und des daraus resultierenden Verlusts des "Aufweitens" und des Flächenrauheit-Effekts erhalten werden.

Die dritte Ausführungsform der Erfindung, gezeigt in Figur 4, weist die abgestimmte Interferenz-Mehrschichtstruktur 34 anstelle der dünnfilmigen Aufzeichnungsstrukturen 14, 30 und 41-41 der entsprechenden Aufzeichnungsplatten 10, 25 und 40 und anstelle der dünnfilmigen Aufzeichnungsstruktur 41-41 der Aufzeichnungsplatte 40, gezeigt in den Fig. 3A und 3B, auf. Die Mehrschichtstruktur 34 umfaßt die Reflexionsschicht 35, die direkt auf dem Träger 16 der Aufzeichnungsplatte 10 oder 40 aufgebracht ist, um den einfallenden Schreibstrahl 12 zu reflektieren. Die Reflexionsschicht 35 besteht aus einem Metall, wie beispielsweise Aluminium. Die transparente dielektrische untere Schutzschicht 36 dient zugleich als Abstandshalter und liegt auf der Reflexionsschicht 35 auf. Die Schutzschicht 36 besteht beispielsweise aus Siliziumnitrid. Die löschbare magnetooptische Aufzeichnungsschicht 37 ist die gleiche wie bei der Aufzeichnungsplatte 10 und ist auf der unteren Schutzschicht 36 aufgebracht. Für die Anwendung in der Interferenz-Mehrschichtstruktur 34 besteht die magnetooptische Aufzeichnungsschicht 37 aus einer Legierung, die beispielsweise aus Terbium, Eisen, Kobalt und Platin zusammengesetzt ist. Die obere Schutzschicht 38 aus transparentem dielektrischem Material besteht beispielsweise auch aus Siliziumnitrid und liegt auf der magnetooptischen Aufzeichnungsschicht 37 auf. Die Dicken der Schichten 35, 36, 37 und 38 der Interferenz-Mehrschichtstruktur 34 sind nach bekannten Techniken ausgelegt, die auch eine Variation in den Dicken zulassen und trotz dieser Variation die gewünschte Abstimmung erreichen, um die Differenz des effektiven Kerr-Winkels der Polarisationsdrehung entsprechend den unterschiedlichen Richtungen nach oben oder unten der Magnetisierung magnetooptischen Aufzeichnungsschicht 37 zu verstärken und zu optimieren. Diese Verstärkung wird zusätzlich zu derjenigen erhalten, die aus der Verwendung der Struktur für einen Strahlungseinfall über einen Luftspalt bei den Aufzeichnungsplatten 10 und 40 resultiert. Bei einer Ausführungsform der Interferenz-Mehrschichtstruktur 34 liegen die Schichtdicken in folgenden Bereichen:

| Schichtdicke | |
|---|---|
| Schicht | Dicke (nm) |
| Reflexionsschicht 35 | 100 |
| Schutzschicht (Abstandshalter) 36 | 50 |
| Magnetooptische Aufzeichnungsschicht 37 | 24 |
| Obere Schutzschicht 38 | 140 |

Mit der auf dem Träger 16 der Aufzeichnungsplatte 10 aufgebrachten Interferenz-Mehrschichtstruktur 34 ist es möglich, da der intensitätsmodulierte Schreibstrahl 12 durch den Träger nicht hindurchgeleitet wird, das Trägermaterial ohne Berücksichtigung der optischen Durchlässigkeitseigenschaften auszuwählen.

Aus den Figuren 1A, 2A und 3A ist ersichtlich, daß die Aufzeichnungsplatten 10, 25 und 40 mit einem Fenster ausgestattet sind, ähnlich dem Fenster 21 der Aufzeichnungsplatte 10, wobei dieses Fenster auf der Seite der Aufzeichnungsplatte 10, 25 oder 40 angeordnet ist, auf der der Schreibstrahl 12 einfällt. Aus den Figuren 1B, 2B und 3B ist ein Einfallswinkel des Zentralstrahls 68 des Schreibstrahls 12 auf die entsprechenden Fenster 21, 27 und 53 von 90° zu entnehmen. Der charakteristische Schreibstrahl 12 ist eine fokussierter Lichtstrahl mit einer numerischen Apertur im Bereich von 0,5 bis 0,65. Das Magnetfeld 11 wird durch eine Spule 69 (Fig. 1 und 2) erzeugt, und eine ähnliche Spule 69 wird zusammen mit der Aufzeichnungsplatte 40 verwendet. Das Magnetfeld 11 verläuft senkrecht zu der Ebene, gebildet aus den ebenen Flächen, wie beispielsweise den ebenen Flächen 24-24 in Fig. 1A, der Aufzeichnungsplatten 10, 25, 40. Der Schreibstrahl 12 durchsetzt das Fenster 21 der Aufzeichnungsplatte 10, das Fenster 27 der Aufzeichnungsplatte 25 und die Fenster 53-53 der Aufzeichnungsplatte 40. Anschließend durchläuft der Schreibstrahl 12 die Luftspalte 22 bzw. 54-54 oder, im Falle der Aufzeichnungsplatte 25, die transparente Klebemittelschicht 28 und durchdringt anschließend die optisch transparenten Schichten 63 der Aufzeichnungsplatten 10, 25 und 40. Ist die Strahlungsintensität der Strahlung 12 hoch, so handelt es sich um einen Schreibstrahl, der in Anwesenheit des Magnetfeldes 11 die Information bzw. die Daten in die magnetoopti-

10

sche Aufzeichnungsschicht einschreibt. Insbesondere gilt dann, wenn die Modulation der Intensität der Strahlung 12 einen Schreibstrahl 12 hoher Intensität liefert, daß das Material der entsprechenden magnetooptischen Aufzeichnungsschicht 15, 31 oder 42-42 durch den fokussierten Schreibstrahl 12 lokal erwärmt wird, wodurch die Koerzitivität des Materials unter den Wert des Magnetfeldes 11 absinkt, somit eine Umkehr der Magnetisierungsrichtung des Materials der entsprechenden magnetooptischen Aufzeichnungsschichten 15, 31 und 42-42 gegenüber deren ursprünglichen unbeschriebenen Zustand ermöglicht wird und es zu einer lokalen Ausrichtung in Richtung des Magnetfeldes 11 kommt. Während des Einschreibens ist das Magnetfeld 11 in eine Richtung entgegengesetzt zu der Richtung der Magnetisierung des Materials auf den unbeschriebenen magnetooptischen Aufzeichnungsschichten 15, 31 und 42-42 orientiert. Ist beispielsweise die Richtung der Magnetisierung der magnetooptischen Schichten 15, 31 und 42-42 ursprünglich in den Figuren 1A, 2A und 3A nach oben gerichtet, so wird an bestimmten lokalen Stellen der magnetooptischen Aufzeichnungsschichten 15, 31 oder 42-42, auf die der Schreibstrahl auftrifft, die Richtung der Magnetisierung umgekehrt und verläuft dann nach unten. Durch den Schreibstrahl 12 allein erfolgt keine Aufzeichnung auf den magnetooptischen Aufzeichnungsschichten 15, 31 und 42-42, erst durch das Zusammenwirken des Schreibstrahls 12 und des Magnetfeldes 11 resultiert eine Aufzeichnung der Strahlungsintensitätsmodulation in Gestalt einer Umkehrung der Magnetisierung an den Stellen, an denen die magnetooptischen Schichten 15, 31 oder 42-42 erhitzt werden, wie dies voranstehend beschrieben ist.

Im Falle der magnetooptischen Aufzeichnungsschicht 37 der Interferenz-Mehrschichtstruktur 34 erfolgt eine größere Erwärmung der magnetooptischen Aufzeichnungsschicht 37 infolge der Interferenzstruktur.

Zum Auslesen der Aufzeichnungsplatte, die durch den Schreibstrahl 12 beschrieben wurde, wird ein planpolarisierter Lesestrahl der fokussierten Strahlung 12 mit erheblich reduzierter Intensität senkrecht auf die entsprechenden Einfallseiten 13, 13' und 43 der Aufzeichnungsplatten 10, 25 und 40 gerichtet. Der Lesestrahl 12 durchstrahlt die entsprechenden Fenster 21, 27 und 53-53 sowie die entsprechenden Luftspalte 22 und 54-54 oder die Klebemittelschicht 28 und durchsetzt desweiteren die optisch transparenten Schichten 63 und trifft auf die entsprechenden magnetooptischen Aufzeichnungsschichten 15, 31 und 42-42 auf. An den Stellen, an denen der Schreibstrahl 12 Daten auf den magnetooptischen Aufzeichnungsschichten 15, 31 oder 42-42 aufgezeichnet hat, ruft die aus dem Einschreiben resultierende Umkehr der Magnetisierungsrichtung an diesen Stellen einen entsprechenden polaren magnetooptischen Kerr-Effekt hervor, der die Polarisationsebene des Lesestrahls 12 in eine Richtung dreht, die entgegengesetzt zu derjenigen der Stellen ist, deren Magnetisierung nicht umgekehrt wurde. Der Lesestrahl 12 wird an den magnetooptischen Aufzeichnungsschichten 15, 31 und 42-42, wie durch die Pfeile 70 (Fig. 1A, 2A und 3A) gezeigt, reflektiert, und die Drehungen der Polarisationsebenen werden detektiert. Im Falle der magnetooptri-schen Aufzeichnungsschicht 37 der Interferenz-Mehrschichtstruktur 34 wird der Lesestrahl 12 sowohl von der Aufzeichnungsschicht 37 als auch von der Reflexionsschicht 35 reflektiert, wobei durch geeignete Wahl der Dicke der Transparenten dielektrischen Abstand-Schutzschicht 36, die zugleich als Abstandshalter dient, dafür gesorgt wird, daß die an den Schichten 37 und 35 reflektierten Teilstrahlbündel nicht miteinander in Phase stehen.

Die Vorteile der Struktur der Aufzeichnungsplatten 10 und 40, bei denen jeweils der optische Lesestrahl 12 einen Luftspalt durchquert, befor er auf die dünnfilmigen magnetooptischen Aufzeichnungsstrukturen 14 und 41-41 auftrifft, wie dies in den entsprechenden Figuren 1A oder 3A gezeigt ist, oder unter Verwendung der Interferenz-Mehrschichtstruktur 34, gezeigt in Fig. 4, ergeben eine bessere Verstärkung des Kerr-Signals durch eine Antireflexionsaufweitung. Desweiteren wird bei derartigen Aufzeichnungsplatten 10 und 40 die Notwendigkeit der Verwendung eines optisch hochwertigen gerillten Trägers, der enge Toleranzen bezüglich der Doppelbrechung und des Doppelbrechungsgradienten besitzt, vermieden. Stattdessen können die Träger 16 und 45 ohne Berücksichtigung der optischen Durchlässigkeitseigenschaften eingesetzt werden. Der Einfluß der Mikro-Rauheit der Substrate 16 und 45 ist durch den Lufteinfall des Lesestrahls 12 im Vergleich zu dem Einfall des Lesestrahls auf einen Träger erheblich reduziert. Da die Träger 16 und 45 nicht transparent sein müssen, können nicht transparente Materialien, wie Metall, auf jeder Seite der Träger 16 und 45 verwendet werden, entweder um die Masse der Träger gegen Feuchtigkeit abzudichten oder die Adhäsion oder Barriereeigenschaften der unteren Schutzschicht 62 zu verbessern. Die einander gegenüberliegenden Seiten 46 und 47 des Trägers (Fig. 3B) und 59 (Fig. 1B) werden einer kräftigen Plasma- oder Ionenstrahlbehandlung unterzogen, um die Seiten zu vernetzen und zu härten, die Seiten für eine verbesserte adhäsive Bindung der dünnfilmigen Aufzeichnungsstrukturen 14 und 41-41 der entsprechenden Aufzeichnungsplatten 10 und 40 zu aktivieren oder um die adhäsive Bindung der Reflexionsschicht 35 auf diesen Substratseiten zu verbessern, niedermolekulare Gewichtsfragmente des Polymers einzuschmelzen oder von diesen Seiten abzuschmelzen, ohne Berücksichtigung der optischen Durchlässigkeitseigenschaften.

Durch die transparenten Fenster 21, 27 und 53-53, die ebene Seiten aufweisen, wie die Flächen 24 und 57-57 der entsprechenden Aufzeichnungsplatten 10 und 40, kommt es zu einer durch Staub bedingten Defokussierung der Strahlung.

Experimentell wurde beobachtet, daß Interferenz-Effekte, bedingt durch die Luftspalte 22 und 54-54, kein ernsthaftes Problem bilden; dies gilt auch für den Kompensationseffekt des Reflexions- und des Kerr-Winkel-Faktors, die zu dem Kerr-Signal beitragen.

Es wurde auch experimentell beobachtet, daß das Signal-zu-Rausch-Verhältnis eines Testsignals, das durch die entsprechenden Fenster 21 und 53-53 und durch die Luftspalte 22 und 54-54 hindurchtritt, wesentlich größer ist als das Signal-zu-Rausch-Verhältnis, das auftritt, wenn der Lesestrahl 12 durch einen Träger hindurchgeleitet wird, wie dies voranstehend im Zusammenhang mit bekannten magnetooptischen Aufzeichnungsplatten beschrieben ist. Die Verbesserung beträgt etwa 3,7 dB im Signal-zu-Rausch-Verhältnis.

**Patentansprüche**

1. Magnetooptische Aufzeichnungsplatte mit einer ersten löschbaren Aufzeichnungsstruktur (14, 30, 34) auf einem Träger (16, 26) für die magnetooptische Aufzeichnung, die in Anwesenheit eines Magnetfeldes durch einen Schreibstrahl erfolgt, der auf eine Einfallseite der Aufzeichnungsplatte auftrifft, wobei zumindest ein Teil des Trägers von einer ersten Stützstruktur (18, 28) überlagert ist, die eine von der löschbaren Aufzeichnungsstruktur beabstandete Stützfläche aufweist, auf der ein erstes ebenes Fenster (21; 27) befestigt ist, das einen Spalt mit der Seite der ersten löschbaren magnetooptischen Aufzeichnungsstruktur (14; 30) einschließt, die der Einfallseite (13; 13') zugewandt ist, dadurch gekennzeichnet, daß der Träger (16; 26) aus einem Material gefertigt ist, dessen Trageigenschaften unabhängig von dessen optischen Transparenzeigenschaften ausgewählt sind, wobei das erste Fenster (21: 27) aus einem Material besteht, das aus der Gruppe Polymethylmethacrylat, Polymethylpenten und Polyolefin ausgewählt ist.

2. Magnetooptische Aufzeichnungsplatte nach Anspruch 1, dadurch gekennzeichnet, daß die Stützstruktur (18) aus einem optisch transparenten Haftmaterial besteht, das auf dem Träger (16) aufliegt und daß der Spalt ein Luftspalt (22) ist.

3. Magnetooptische Aufzeichnungsplatte nach Anspruch 2, dadurch gekennzeichnet, daß die löschbare magnetooptische Aufzeichnungsstruktur (14) aus einer Aufzeichnungsschicht (15) und je einer Schutzschicht (62, 63) auf jeder Seite der Aufzeichnungsschicht (15) besteht, wobei eine der Schutzschichten an den Luftspalt (22) angrenzt, daß die angrenzende Schutzschicht (63) optisch transparent ist und daß das Material des Trägers (16) vergleichbare wärme- und feuchtigkeitsabhängige Ausdehnungskoeffizienten wie die Aufzeichnungsstruktur (15) hat.

4. Magnetooptische Aufzeichnungsplatte nach Anspruch 3, dadurch gekennzeichnet, daß die löschbare magnetooptische Aufzeichnungsstruktur (14) aus einer oberen und unteren Schutzschicht (63, 62) besteht, die auf den sich gegenüberliegenden Seiten der Aufzeichnungsschicht (15) aufgebracht sind, daß die untere, dem Träger (16) nächste Schutzschicht (62) aus einem Material besteht, das, ohne Beachtung seiner optischen Durchlässigkeit, weitgehend hermetisch und adhäsiv gegenüber dem Träger (16) ist.

5. Magnetooptische Aufzeichnungsplatte nach Anspruch 1, dadurch gekennzeichnet, daß die löschbare magnetooptische Aufzeichnungsstruktur auf dem Träger (16) eine Reflexionsschicht (35) aufweist, die den durch Schutzschichten (38, 36) und eine Aufzeichnungsschicht (37) hindurchtretenden Schreibstrahl (12) reflektiert, und daß die Aufzeichnungsschicht (37), die Schutzschichten (38, 36) und die Reflexionsschicht (35) eine Mehrschichtstruktur (34) bilden, wobei die Dicken der einzelnen Schichten dieser Mehrschichtstruktur so ausgewählt sind, daß die effektive Differenz der Kerr-Polarisationsdrehung entsprechend den unterschiedlichen Magnetisierungsrichtungen der Aufzeichnungsschicht (37) verstärkt und optimiert ist.

6. Magnetooptische Aufzeichnungsplatte nach Anspruch 5, dadurch gekennzeichnet, daß die Temperatur der Aufzeichnungsschicht aufgrund der Wärmeerzeugung durch den Schreibstrahl ansteigt und daß die Aufzeichnungsschicht (37) aus einer Terbium-Kobalt-Eisen-Platin-Leigierung besteht.

**7.** Magnetooptische Aufzeichnungsplatte nach den Anspruch 1 und 2, dadurch gekennzeichnet, daß der Spalt zwischen dem Fenster (27) und der löschbaren magnetooptischen Aufzeichnungsstruktur (30) mit einem optisch transparenten Haftmittel (28) ausgefüllt ist, das mit dem Haftmaterial der Stützstruktur (18) übereinstimmt.

**8.** Aufzeichnungsplatte nach Anspruch 1, dadurch gekennzeichnet, daß die Aufzeichnungsplatte doppelseitig ausgeführt ist, daß dazu die andere Seite des Trägers eine zweite löschbare Aufzeichnungsstruktur (41) und eine zweite Stützstruktur (50), auf der ein zweites ebenes Fenster (53) befestigt ist, aufweist, wobei die zweite Aufzeichnungsstruktur, die zweite Stützstruktur und das zweite Fenster die jeweiligen Merkmale der ersten Aufzeichnungsstruktur, der ersten Stützstruktur und des ersten Fensters aufweisen.

**9.** Magnetooptische Aufzeichnungsplatte nach Anspruch 8, dadurch gekennzeichnet, daß die Stützstrukturen (50, 50) aus einem transparenten Haftmaterial bestehen, das auf jeder der sich gegenüberliegenden Seiten (65) der Aufzeichnungsstrukturen (41, 41) vollflächig aufliegt und den jeweiligen Luftspalt (54) ausfüllt.

**10.** Magnetooptische Aufzeichnungsplatte nach Anspruch 8, dadurch gekennzeichnet, daß jede der beiden löschbaren magnetooptischen Aufzeichnungsstrukturen (41, 41) aus einer Aufzeichnungsschicht (42) und je einer Schutzschicht (63, 62) auf jeder Seite der Aufzeichnungsschicht besteht, wobei eine der Aufzeichnungsschichten an den Luftspalt (54) angrenzt, daß die angrenzende Schutzschicht (63) optisch transparent ist, daß jede der beiden löschbaren Aufzeichnungsstrukturen auf dem Träger (45) eine Reflexionsschicht (35) aufweist, die den durch die Schutzschichten (63, 62) und die Aufzeichnungsschicht (42) hindurchtretenden Schreibstrahl (12) reflektiert, und daß jede der beiden Aufzeichnungsschichten mit ihren zugehörigen beiden Schutzschichten und der zugehörigen Reflexionsschicht je eine Mehrschichtstruktur (34) bildet, wobei die Dicken der einzelnen Schichten dieser Mehrschichtstrukturen so ausgewählt sind, daß die effektive Differenz der Kerr-Polarisationsdrehung entsprechend den unterschiedlichen Magnetisierungsrichtungen der Aufzeichnungsschicht verstärkt und optimiert ist.

**11.** Magnetooptische Aufzeichnungsplatte nach Anspruch 1, dadurch gekennzeichnet, daß ein fester Träger aus einem Material mit verbesserten Trag- und Feuchtigkeitsundurchlässigkeitseigenschaften, ohne Berücksichtigung der optischen Transparenzeigenschaften, gefertigt ist, daß ein transparentes scheibenförmiges Fenster aus einem optisch transparenten Material mit minimaler Doppelbrechung vorhanden ist, das die Strahlung mit minimaler optischer Verzögerung hindurchläßt, daß eine obere Seite (59) des Trägers (16) und eine erste Fläche (24) des Fensters (21) einander gegenüberliegen, daß ein Paar von koaxialen Dichtungsringen (19, 19) die einander gegenüberliegenden Seiten des Trägers und des Fensters abdichtet und zwischen diesen einen kreisringförmigen Raum ausbildet, daß eine Aufzeichnungsschicht (23) auf die obere Seite (59) des Trägers (16) aufgebracht ist, dem Fenster gegenüberliegend, und daß die Aufzeichnungsschicht aus einem löschbaren, magnetooptischen Material besteht, auf dem die Aufzeichnung in Anwesenheit eines Magnetfeldes (11) durch einen Schreibstrahl (12) erfolgt, der das Fenster und den kreisringförmigen Raum durchdringt.

**12.** Magnetooptische Aufzeichnungsplatte nach Anspruch 1, dadurch gekennzeichnet, daß der Träger (16; 26) Rillen (58) aufweist, die ohne Berücksichtigung der optischen Transparenzeigenschaften des Trägers ausgebildet sind.

**13.** Magnetooptische Aufzeichnungsplatte nach Anspruch 1, dadurch gekennzeichnet, daß das Material des Trägers (16; 26) Polycarbonat ist.

**14.** Magnetooptische Aufzeichnungsplatte nach Anspruch 1, dadurch gekennzeichnet, daß die Aufzeichnungsschicht (15; 31) aus einer magnetooptischen Legierung der Seltenen Erden und der Übergangsmetalle besteht.

**15.** Magnetooptische Aufzeichnungsplatte nach Anspruch 14, dadurch gekennzeichnet, daß die Legierung aus einer der Gruppen gebildet wird, die aus den Elementen Terbium, Eisen und Kobalt; Gadolinium, Terbium und Eisen; Gadolinium, Terbium, Eisen und Kobalt; und Terbium und Kobalt bestehen.

16. Magnetooptische Aufzeichnungsplatte nach Anspruch 15, dadurch gekennzeichnet, daß jede dieser Gruppen desweiteren ein oder mehrere Elemente aus der Gruppe umfaßt, die aus Platin, Titan und Chrom besteht.

17. Magnetooptische Aufzeichnungsplatte nach Anspruch 4, dadurch gekennzeichnet, daß die untere Schutzschicht (62) Aluminium ist.

18. Magnetooptische Aufzeichnungsplatte nach Anspruch 1, daß das Material des Fensters (21; 27) chemisch gehärtetes Glas ist, wobei sich die ebenen Flächen (24; 29) des Fensters in einem Zustand der Druckspannung derart befinden, daß das Fenster nur eine minimale Doppelbrechung aufrechterhält.

19. Magnetooptische Aufzeichnungsplatte nach Anspruch 12, dadurch gekennzeichnet, daß Rillen (58) auf der Seite des Trägers (16; 26) ausgebildet sind, die der Einfallseite (13; 13') der Aufzeichnungsplatte (10; 25) zugewandt ist.

20. Magnetooptische Aufzeichnungsplatte nach Anspruch 12, dadurch gekennzeichnet, daß auf der Fläche des Trägers (16; 26), die am weitesten entfernt von der Einfallseite (13; 13') der Aufzeichnungsplatte (10; 25) liegt, eine hermetisch abdichtende Reflexionsschicht (35) aufgebracht ist.

21. Magnetooptische Aufzeichnungsplatte nach Anspruch 20, dadurch gekennzeichnet, daß die hermetisch abdichtende Reflexionsschicht (35) ein Metall ist.

22. Magnetooptische Aufzeichnungsplatte nach Anspruch 21, dadurch gekennzeichnet, daß die hermetisch abdichtende Reflexionsschicht (35) aus Aluminium besteht.

23. Magnetooptische Aufzeichnungsplatte nach Anspruch 3, dadurch gekennzeichnet, daß jede der Schutzschichten (63, 62; 32, 33) aus Silziumnitrid besteht.

24. Magnetooptische Aufzeichnungsplatte nach Anspruch 1, dadurch gekennzeichnet, daß der Träger (16; 26) aus einem Spritzgußmaterial geformt ist.

25. Magnetooptische Aufzeichnungsplatte nach Anspruch 23, dadurch gekennzeichnet, daß die an den Luftspalt (22) angrenzende Schutzschicht (63) aus Siliziumnitrid besteht.

26. Magnetooptische Aufzeichnungsplatte nach Anspruch 8, dadurch gekennzeichnet, daß jede der beiden löschbaren magnetooptischen Aufzeichnungsstrukturen (41, 41) aus einer der beiden Aufzeichnungsschichten (42, 42), die an jeder Seite von jeweils einer Schutzschicht (63, 62) eingeschlossen ist, gebildet ist, wobei eine (63) der Schutzschichten an den Luftspalt (54) angrenzt, und jede der beiden angrenzenden Schutzschichten (63) optisch transparent ist.

27. Magnetooptische Aufzeichnungsplatte nach Anspruch 8, dadurch gekennzeichnet, daß der Träger (45) mit Rillen (66) ausgestattet ist, die ohne Berücksichtigung der optischen Transparenzeigenschaften des Trägers ausgebildet sind.

28. Magnetooptische Aufzeichnungsplatte nach Anspruch 8, dadurch gekennzeichnet, daß das Material des Trägers (45) Polycarbonat ist.

29. Magnetooptische Aufzeichnungsplatte nach Anspruch 8, dadurch gekennzeichnet, daß das Material der Fenster (53, 53) chemisch gehärtetes Glas ist, wobei sich die ebenen Flächen (57, 57) in einem Zustand der Druckspannung befinden, so daß die Fenster nur eine minimale Doppelbrechung aufrechterhalten.

30. Magnetooptische Aufzeichnungsplatte nach Anspruch 27, dadurch gekennzeichnet, daß die Rillen (66) auf jeder der sich gegenüberliegenden Seiten des Trägers (45) ausgebildet sind.

31. Magnetooptische Aufzeichnungsplatte nach Anspruch 26, dadurch gekennzeichnet, daß jede der beiden löschbaren magnetooptischen Aufzeichnungsstrukturen (41, 41) aus einer oberen und unteren Schutzschicht (63, 62), die auf den gegenüberliegenden Seiten jeder der beiden Aufzeichnungsschichten (42,

14

42) aufgebracht sind, besteht, wobei die unteren Schutzschichten (62) dem Träger (45) am nächsten sind und aus einem Material geformt sind, das aufgrund seiner Dichtungs- und Adhäsionseigenschaften in bezug auf den Träger (45), jedoch ohne Berücksichtigung seiner optischen Durchlässigkeitseigenschaften, ausgewählt ist.

32. Magnetooptische Aufzeichnungsplatte nach Anspruch 31, dadurch gekennzeichnet, daß die unteren Schutzschichten (62) aus Aluminium bestehen.

33. Magnetooptische Aufzeichnungsplatte nach Anspruch 8, dadurch gekennzeichnet, daß die Aufzeichnungsschichten (42, 42) aus einer magnetooptischen Legierung der Seltenen Erden und der Übergangsmetalle gefertigt sind.

34. Magnetooptische Aufzeichnungsplatte nach Anspruch 33, dadurch gekennzeichnet, daß die Legierung aus der Gruppe, bestehend aus A, B, C und D, ausgewählt wird, wobei A die Elemente Terbium, Eisen und Kobalt; B die Elemente Gadolinium, Terbium und Eisen; C die Elemente Gadolinium, Terbium, Eisen und Kobalt; und D die Elemente Terbium und Kobalt umfaßt.

35. Magnetooptische Aufzeichnungsplatte nach Anspruch 34, dadurch gekennzeichnet, daß jede der Gruppen desweiteren noch ein oder mehrere Elemente mit einschließt, die aus der Gruppe, bestehend aus Platin, Titan und Chrom, ausgewählt sind.

36. Magnetooptische Aufzeichnungsplatte nach Anspruch 26, dadurch gekennzeichnet, daß die Schutzschichten (63, 62) aus Siliziumnitrid bestehen.

37. Magnetooptische Aufzeichnungsplatte nach Anspruch 8, dadurch gekennzeichnet, daß der Träger (45) aus einem Spritzgußmaterial geformt ist.

38. Magnetooptische Aufzeichungsplatte nach Anspruch 26, dadurch gekennzeichnet, daß die an den Luftspalt (54) angrenzende Schutzschicht (62) aus Siliziumnitrid gefertigt ist.

39. Magnetooptische Aufzeichnungsplatte nach Anspruch 10, dadurch gekennzeichnet, daß die Temperatur der Aufzeichnungsschicht (42) aufgrund der einfallenden Schreibstrahlung ansteigt und daß die Aufzeichnungsschicht aus einer Legierung aus Terbium, Kobalt, Eisen und Platin gefertigt ist.

40. Magnetooptische Aufzeichnungsplatte nach Anspruch 8, dadurch gekennzeichnet, daß die Stützstruktur (50) aus einem optisch transparenten Haftmaterial besteht, das die beiden Luftspalte (54, 54) vollständig ausfüllt.

**Claims**

1. Magneto-optic recording disk having a first erasable recording structure (14, 30, 34) on a substrate (16, 26) for magneto-optic recording, which takes place in the presence of a magnetic field by a write beam, which is incident on an incidence side of the recording disk, in which at least a part of the substrate is overlaid by a first supporting structure (18, 28), which exhibits a supporting surface which is spaced from the erasable recording structure and on which a first flat window (21; 27) is secured, which includes a gap with that side of the first erasable magneto-optic recording structure (14; 30) which faces the incidence side (13; 13'), characterised in that the substrate (16; 26) is prepared from a material, the carrying properties of which are selected to be independent of its optical transparency properties, in which the first window (21: 27) is composed of a material which is selected from the group comprising polymethylmethacrylate, polymethylpentene and polyolefin.

2. Magneto-optic recording disk according to Claim 1, characterised in that the supporting structure (18) is composed of an optically transparent adhesive which rests on the substrate (16) and in that the gap is an air gap (22).

3. Magneto-optic recording disk according to Claim 2, characterised in that the erasable magneto-optic recording structure (14) is composed of a recording layer (15) and a respective protective layer (62, 63) on each side of the recording layer (15), one of the protective layers adjoining the air gap (22), in that the adjoining protective layer (63) is optically transparent, and in that the material of the substrate (16) has comparable heat dependent and moisture dependent coefficients of expansion to the recording structure (15).

4. Magneto-optic recording disk according to Claim 3, characterised in that the erasable magneto-optic recording structure (14) is composed of an upper and lower protective layer (63, 62), which protective layers are applied to the mutually opposite sides of the recording layer (15), in that the lower protective layer (62), nearest to the substrate (16), is composed of a material which, without considering its optical transmittance, is substantially hermetically sealed and adhesive in relation to the substrate (16).

5. Magneto-optic recording disk according to Claim 1, characterised in that the erasable magneto-optic recording structure on the substrate (16) exhibits a reflective layer (35), which reflects the write beam (12) which passes through protective layers (38, 36) and a recording layer (37), and in that the recording layer (37), the protective layers (38, 36) and the reflective layer (35) form a multilayer structure (34), the thicknesses of the individual layers of this multilayer structure being selected so that the effective difference of the Kerr polarisation rotation is enhanced and optimised in accordance with the differing directions of magnetisation of the recording layer (37).

6. Magneto-optic recording disk according to Claim 5, characterised in that the temperature of the recording layer increases on account of the generation of heat by the write beam, and in that the recording layer (37) is composed of a terbium-cobalt-iron-platinum alloy.

7. Magneto-optic recording disk according to Claims 1 and 2, characterised in that the gap between the window (27) and the erasable magneto-optic recording structure (30) is filled with an optically transparent adhesive (28), which is in conformity with the adhesive material of the supporting structure (18).

8. Recording disk according to Claim 1, characterised in that the recording disk is designed to be two-sided, in that to this end the other side of the substrate exhibits a second erasable recording structure (41) and a second supporting structure (50), on which a second flat window (53) is secured, a second recording structure, the second supporting structure and the second window exhibiting the respective features of the first recording structure, the first supporting structure and the first window.

9. Magneto-optic recording disk according to Claim 8, characterised in that the supporting structures (50, 50) are composed of a transparent adhesive material, which rests over its entire surface on each one of the mutually opposite sides (65) of the recording structures (41, 41) and fills the respective air gap (54).

10. Magneto-optic recording disk according to Claim 8, characterised in that each one of the two erasable magneto-optic recording structures (41, 41) is composed of a recording layer (42) and a respective protective layer (63, 62) on each side of the recording layer, one of the recording layers adjoining the air gap (54), and in that the adjoining protective layer (63) is optically transparent, in that each one of the two erasable recording structures on the substrate (45) exhibits a reflective layer (35), which reflects the write beam (12) which passes through the protective layers (63, 62) and the recording layer (42), and in that each one of the two recording layers forms, together with their associated two protective layers and the associated reflective layer, a respective multilayer structure (34), the thicknesses of the individual layers of these multilayer structures being selected so that the effective difference of the Kerr polarisation rotation is enhanced and optimised in accordance with the differing directions of magnetisation of the recording layer.

11. Magneto-optic recording disk according to Claim 1, characterised in that a solid substrate is prepared from a material having improved carrying and moisture impermeability properties, without consideration of the optical transparency properties, in that a transparent plate-shaped window of an optically transparent material having minimal birefringence is provided, which transmits the radiation with minimal optical retardation, in that an upper side (59) of the substrate (16) and a first surface (24) of the window (21) are opposite to one another, in that a pair of coaxial sealing rings (19, 19) seals off the mutually opposite sides of the substrate and of the window and forms between these a circular space, in that a recording layer (23) is applied to the upper side (59) of the substrate (16), opposite to the window, and in that the recording layer is composed of an erasable, magneto-optic material, on which the recording takes place in the presence of a magnetic field (11) by a write beam (12), which penetrates the window and the circular space.

12. Magneto-optic recording disk according to Claim 1, characterised in that the substrate (16; 26) exhibits grooves (58) which are designed without consideration of the optical transparency properties of the substrate.

13. Magneto-optic recording disk according to Claim 1, characterised in that the material of the substrate (16; 26) is polycarbonate.

14. Magneto-optic recording disk according to Claim 1, characterised in that the recording layer (15; 31) is composed of a magneto-optic alloy of the rare earths and the transition metals.

15. Magneto-optic recording disk according to Claim 14, characterised in that the alloy is formed from one of the groups which are composed of the elements terbium, iron and cobalt; gadolinium, terbium and iron; gadolinium, terbium, iron and cobalt; and terbium and cobalt.

16. Magneto-optic recording disk according to Claim 15, characterised in that each one of these groups further comprises one or more elements from the group which is composed of platinum, titanium and chromium.

17. Magneto-optic recording disk according to Claim 4, characterised in that the lower protective layer (62) is aluminum.

18. Magneto-optic recording disk according to Claim 1, characterised in that the material of the window (21; 27) is chemically hardened glass, in which the flat surfaces (24; 29) of the window are in a state of compressive stress, so that the window maintains only a minimal birefringence.

19. Magneto-optic recording disk according to Claim 12, characterised in that grooves (58) are formed on that side of the substrate (16; 26) which faces the incidence side (13; 13') of the recording disk (10; 25).

20. Magneto-optic recording disk according to Claim 12, characterised in that a hermetically sealing reflective layer (35) is applied to that surface of the substrate (16, 26) which lies furthest from the incidence side (13; 13') of the recording disk (10; 25).

21. Magneto-optic recording disk according to Claim 20, characterised in that the hermetically sealing reflective layer (35) is a metal.

22. Magneto-optic recording disk according to Claim 21, characterised in that the hermetically sealing reflective layer (35) is composed of aluminum.

23. Magneto-optic recording disk according to Claim 3, characterised in that each one of the protective layers (63, 62; 32, 33) is composed of silicon nitride.

24. Magneto-optic recording disk according to Claim 1, characterised in that the substrate (16; 26) is formed from an injection moulded material.

25. Magneto-optic recording disk according to Claim 23, characterised in that the protective layer (63) adjoining the air gap (22) is composed of silicon nitride.

26. Magneto-optic recording disk according to Claim 8, characterised in that each one of the two erasable magneto-optic recording structures (41, 41) is formed from one of the two recording layers (42, 42), which is included at each side of a respective protective layer (63, 62), one (63) of the protective layers adjoining the air gap (54), and each one of the two adjoining protective layers (63) being optically transparent.

17

27. Magneto-optic recording disk according to Claim 8, characterised in that the substrate (45) is equipped with grooves (66), which are designed without consideration of the optical transparency properties of the substrate.

28. Magneto-optic recording disk according to Claim 8, characterised in that the material of the substrate (45) is polycarbonate.

29. Magneto-optic recording disk according to Claim 8, characterised in that the material of the windows (53, 53) is chemically hardened glass, the flat surfaces (57, 57) being in a state of compressive stress, so that the windows maintain only a minimal birefringence.

30. Magneto-optic recording disk according to Claim 27, characterised in that the grooves (66) are formed on each one of the mutually opposite sides of the substrate (45).

31. Magneto-optic recording disk according to Claim 26, characterised in that each one of the two erasable magneto-optic recording structures (41, 41) is composed of an upper and lower protective layer (63, 62), which layers are applied to the opposite sides of each one of the two recording layers (42, 42), the lower protective layers (62) being nearest to the substrate (45) and being formed from a material which is selected on account of its sealing and adhesion properties with respect to the substrate (45), but without consideration of its optical transmittance properties.

32. Magneto-optic recording disk according to Claim 31, characterised in that the lower protective layers (62) are composed of aluminum.

33. Magneto-optic recording disk according to Claim 8, characterised in that the recording layers (42, 42) are prepared from a magneto-optic alloy of the rare earths and the transition metals.

34. Magneto-optic recording disk according to Claim 33, characterised in that the alloy is selected from the group composed of A, B, C and D, where A comprises the elements terbium, iron and cobalt; B the elements gadolinium, terbium and iron; C the elements gadolinium, terbium, iron and cobalt; and D the elements terbium and cobalt.

35. Magneto-optic recording disk according to Claim 34, characterised in that each one of the groups further includes one or more elements which are selected from the group composed of platinum, titanium and chromium.

36. Magneto-optic recording disk according to Claim 26, characterised in that the protective layers (63, 62) are composed of silicon nitride.

37. Magneto-optic recording disk according to Claim 8, characterised in that the substrate (45) is formed from an injection moulded material.

38. Magneto-optic recording disk according to Claim 26, characterised in that the protective layer (62) adjoining the air gap (54) is prepared from silicon nitride.

39. Magneto-optic recording disk according to Claim 10, characterised in that the temperature of the recording layer (42) increases on account of the incident write beam, and in that the recording layer is prepared from an alloy of terbium, cobalt, iron and platinum.

40. Magneto-optic recording disk according to Claim 8, characterised in that the supporting structure (50) is composed of an optically transparent adhesive, which entirely fills the two air gaps (54, 54).

**Revendications**

1. Disque d'enregistrement magnéto-optique comportant une première structure d'enregistrement effaçable (14, 30, 34) sur un support (16, 26) pour l'enregistrement magnéto-optique, qui s'effectue en présence d'un champ magnétique, au moyen d'un faisceau d'inscription, qui rencontre une face d'incidence sur le disque d'enregistrement, dans lequel sur au moins une partie du support est superposée une première structure de support (18, 28), qui possède une surface de support qui est distante de la structure d'enregistrement effaçable et sur laquelle est fixée une première fenêtre plane (21;27), qui délimite une fente avec la face de la première structure d'enregistrement magnéto-optique effaçable (14;30), qui est tournée vers la face d'incidence (13;13'), caractérisé en ce que le support (16;26) est réalisé en un matériau dont les caractéristiques de "portance" sont choisies indépendamment de ses caractéristiques de transparence optique, la première fenêtre (21;27) étant réalisée en un matériau qui est choisi parmi le groupe polyméthylméthacrylate, polyméthylpentène et polyoléfine.

2.  Disque d'enregistrement magnéto-optique selon la revendication 1, cractérisé en ce que ladite structure de support (18) est réalisée en un matériau adhésif optiquement transparent, qui s'applique sur le support (16), et que la fente est une fente d'air (22).

3.  Disque d'enregistrement magnéto-optique selon la revendication 2, caractérisé en ce que la structure d'enregistrement magnéto-optique effaçable (14) est constituée par une couche d'enregistrement (15) et respectivement d'une couche de protection (62,63) située sur chaque face de la couche d'enregistrement (15), l'une des couches de protection jouxtant la fente formée d'air (22), que la couche de protection contiguë (63) est transparente du point de vue optique et que le matériau du support (16) possède un coefficient de dilatation qui dépend de la chaleur et de l'humidité et est comparable à celui de la structure d'enregistrement (15).

4.  Disque d'enregistrement magnéto-optique selon la revendication 3, caractérisé en ce que la structure d'enregistrement magnéto-optique effaçable (14) est constituée par des couches supérieure et inférieure de protection (63, 62), qui sont déposées sur les faces opposées de la couche d'enregistrement (15), que la couche inférieure de protection (62), qui est contiguë au support (16), est réalisée en un matériau qui présente dans une large mesure un caractère hermétique et une adhérence au support (16), indépendamment de sa transparence optique.

5.  Disque d'enregistrement magnéto-optique selon la revendication 1, caractérisé en ce que la structure d'enregistrement magnéto-optique effaçable située sur le support (16) possède une couche réfléchissante (35), qui réfléchit le faisceau d'inscription (12) qui traverse les couches de protection (38, 36) et une couche d'enregistrement (37), et que la couche d'enregistrement (37), les couches de protection (38, 36) et la couche réfléchissante (35) forment une structure à couches multiples (34), dont les épaisseurs des différentes couches sont choisies de manière que la différence effective de la rotation de polarisation Kerr est amplifiée et optimisée en fonction des différentes directions d'aimantation de la couche d'enregistrement (37).

6.  Disque d'enregistrement magnéto-optique selon la revendication 5, caractérisé en ce que la température de la couche d'enregistrement augmente sous l'effet du dégagement de chaleur produit par le faisceau d'inscription et que la couche d'enregistrement (37) est formée d'un alliage terbium-cobalt-fer-platine.

7.  Disque d'enregistrement magnéto-optique selon les revendications 1 et 2, caractérisé en ce que la fente entre la fenêtre (27) et la structure d'enregistrement magnéto-optique effaçable (30) est remplie par un adhésif optiquement transparent (28), qui est identique au matériau adhésif de la structure de support (18).

8.  Disque d'enregistrement magnéto-optique selon la revendication 1, caractérisé en ce que le disque d'enregistrement est du type double face, qu'à cet effet l'autre face du support possède une seconde structure d'enregistrement effaçable (41) et une seconde structure de support (50), sur laquelle est fixée une seconde fenêtre plane (53), la seconde structure d'enregistrement, la seconde structure de support et la seconde fenêtre possédant la caractéristique particulière de la structure d'enregistrement, de la première structure de support et de la première fenêtre.

9.  Disque d'enregistrement magnéto-optique selon la revendication 8, caractérisé en ce que les structures de support (50, 50) sont réalisées en un matériau adhésif transparent, qui s'applique sur toute la surface de chacune des faces opposées (65) des structures d'enregistrement (41, 41) et remplit la fente d'air correspondante (54).

**10.** Disque d'enregistrement magnéto-optique selon la revendication 8, caractérisé en ce que chacune des deux structures d'enregistrement magnéto-optique effaçable (41, 41) est constituée par une couche d'enregistrement (42) et respectivement une couche de protection (63, 62) située sur chaque face de la couche d'enregistrement, l'une des couches d'enregistrement limitant la fente d'air (54), que la couche de protection contiguë (63) est transparente du point de vue optique, que chacune des deux structures d'enregistrement effaçables situées sur le support (45) possède une couche réfléchissante (35), qui réfléchit le faisceau d'inscription (12) qui traverse les couches de protection (63, 62) et la couche d'enregistrement (42), et que chacune des deux couches d'enregistrement forme, avec les deux couches de protection, qui lui sont associées, et la couche réfléchissante associée, respectivement une structure à couches multiples (34), dont les épaisseurs des différentes couches sont choisies de telle sorte que la différence effective de la rotation de polarisation Kerr est amplifiée et optimisée en fonction des directions différentes d'aimantation de la couche d'enregistrement.

**11.** Disque d'enregistrement magnéto-optique selon la revendication 1, caractérisé en ce qu'un support fixe est réalisé en un matériau possédant des caractéristiques améliorées de "portance" et d'étanchéité à l'humidité, indépendamment des caractéristiques de transparence optique, qu'il est prévu une fenêtre en forme de plaque transparente réalisée en un matériau optiquement transparent possédant une biréfringence minimale, et que le rayonnement traverse en subissant un retard optique minimum, qu'une face supérieure (59) du support (16) et une première surface (24) de la fenêtre (21) sont disposées en vis-à-vis, qu'un couple de bagues d'étanchéité coaxiales (19, 19) étanchéifient les faces mutuellement opposées du support et de la fenêtre et délimitent entre ces dernières un espace en forme d'anneau circulaire, qu'une couche d'enregistrement (23) est déposée sur l'autre face (59) du support (16), en vis-à-vis de la fenêtre et que la couche d'enregistrement est réalisée en un matériau optique effaçable, sur lequel l'enregistrement est exécuté en présence d'un champ magnétique (11), au moyen d'un faisceau d'inscription (12) qui traverse la fenêtre et l'espace en forme d'anneau circulaire.

**12.** Disque d'enregistrement magnéto-optique selon la revendication 1, caractérisé en ce que le support (16; 26) comporte des rainures (58), qui sont formées sans tenir compte des caractéristiques de transparence optique du support.

**13.** Disque d'enregistrement magnéto-optique selon la revendication 1, caractérisé en ce que le matériau du support (16; 26) est du polycarbonate.

**14.** Disque d'enregistrement magnéto-optique selon la revendication 1, caractérisé en ce que la couche d'enregistrement (15; 31) est réalisée en un alliage magnéto-optique des terres rares et des métaux de transition.

**15.** Disque d'enregistrement magnéto-optique selon la revendication 14, caractérisé en ce que l'alliage est formé à partir de l'un des groupes qui sont constitués par les éléments terbium, fer et cobalt; gadolinium, terbium et fer; gadolinium, terbium, fer et cobalt; et terbium et cobalt.

**16.** Disque d'enregistrement magnéto-optique selon la revendication 15, caractérisé en ce que chacun de ces groupes comprend d'autre part un ou plusieurs éléments tirés du groupe comprenant le platine, le titane et le chrome.

**17.** Disque d'enregistrement magnéto-optique selon la revendication 4, caractérisé en ce que la couche inférieure de protection (62) est formée d'aluminium.

**18.** Disque d'enregistrement magnéto-optique selon la revendication 1, caractérisé en ce que le matériau de la fenêtre (21; 27) est du verre chimiquement trempé, les surfaces planes (24;29) de la fenêtre étant situées dans un état de la contrainte de compression, de telle sorte que la fenêtre maintient uniquement une biréfringence minimale.

**19.** Disque d'enregistrement magnéto-optique selon la revendication 12, caractérisé en ce que des nervures (58) sont formées sur la face du support (16; 26), qui est tournée vers la face d'incidence (13; 13') du disque d'enregistrement (10; 25).

**20.** Disque d'enregistrement magnéto-optique selon la revendication 12, caractérisé en ce qu'une couche réfléchissante (35), qui établit une étanchéité hermétique, est déposée sur la surface du support (16; 26), qui est la plus éloignée de la face d'incidence (13; 13') de la plaque d'enregistrement (10; 25).

**21.** Disque d'enregistrement magnéto-optique selon la revendication 20, caractérisé en ce que la couche réfléchissante (35), qui réalise une étanchéité hermétique, est formée d'un métal.

**22.** Disque d'enregistrement magnéto-optique selon la revendication 21, caractérisé en ce que la couche réfléchissante (35), qui réalise une étanchéité hermétique, est formée d'aluminium.

**23.** Disque d'enregistrement magnéto-optique selon la revendication 3, caractérisé en ce que chacune des couches de protection (63; 63; 32, 33) est constituée de nitrure de silicium.

**24.** Disque d'enregistrement magnéto-optique selon la revendication 1, caractérisé en ce que le support (16; 26) est formé à partir d'un matériau moulé par injection.

**25.** Disque d'enregistrement magnéto-optique selon la revendication 23, caractérisé en ce que la couche de protection (63), qui délimite la fente d'air (22), est formée de nitrure de silicum.

**26.** Disque d'enregistrement magnéto-optique selon la revendication 8, caractérisé en ce que chacune des deux structures d'enregistrement magnéto-optique effaçables (41, 41) est formée par l'une des deux couches d'enregistrement (42, 42), qui sont enserrées, de chaque côté, par des couches de protection correspondantes (63, 62), l'une (63) des couches de protection limitant la fente d'air (54), et chacune des deux couches de protection contiguë (63) est transparente du point de vue optique.

**27.** Disque d'enregistrement magnéto-optique selon la revendication 8, caractérisé en ce que le support (45) est pourvu de rainures (66), qui sont aménagées sans tenir compte des caractéristiques de transparence optique du support.

**28.** Disque d'enregistrement magnéto-optique selon la revendication 8, caractérisé en ce que le matériau du support (45) est du polycarbonate.

**29.** Disque d'enregistrement magnéto-optique selon la revendication 8, caractérisé en ce que le matériau des fenêtres (53, 53) est du verre chimiquement trempé, les surfaces planes (57, 57) étant situées dans un état de la contrainte de compression de telle sorte que les fenêtres maintiennent uniquement une biréfringence minimale.

**30.** Disque d'enregistrement magnéto-optique selon la revendication 27, caractérisé en ce que les rainures (66) sont aménagées sur chacune des faces opposées du support (45).

**31.** Disque d'enregistrement magnéto-optique selon la revendication 26, caractérisé en ce que chacune des deux structures d'enregistrement magnéto-optique effaçable (41, 41) est constituée par des couches supérieure et inférieure de protection (63, 62), qui sont disposées sur les faces opposées de chacune des deux couches d'enregistrement (42, 42), les couches inférieure de protection (62) étant les plus proches du support (45) et étant réalisées en un matériau qui est choisi sur la base de ses caractéristiques d'étanchéité d'adhérence en rapport avec le support (45), mais sans tenir compte de ses caractéristiques de transparence optique.

**32.** Disque d'enregistrement magnéto-optique selon la revendication 31, caractérisé en ce que les couches inférieures de protection (62) sont formées par de l'aluminium.

**33.** Disque d'enregistrement magnéto-optique selon la revendication 8, caractérisé en ce que les couches d'enregistrement (42, 42) sont réalisées en un alliage magnéto-optique des terres rares et des métaux de transition.

**34.** Disque d'enregistrement magnéto-optique selon la revendication 33, caractérisé en ce que l'alliage est choisi parmi le groupe A formé de A, B, C et D, A comprenant les éléments terbium, fer et cobalt; B les éléments gadolinium, terbium et fer; C les éléments gadolinium, terbium, fer et cobalt; et D les

21

éléments terbium et cobalt.

35. Disque d'enregistrement magnéto-optique selon la revendication 34, caractérisé en ce que chacun des groupes contient d'autre part encore simultanément un ou plusieurs éléments qui sont choisis dans le groupe comprenant le platine, le titane et le chrome.

36. Disque d'enregistrement magnéto-optique selon la revendication 26, caractérisé en ce que les couches de protection (63, 62) sont réalisées en nitrure de silicium.

37. Disque d'enregistrement magnéto-optique selon la revendication 8, caractérisé en ce que le support (45) est réalisé en un matériau moulé par injection.

38. Disque d'enregistrement magnéto-optique selon la revendication 26, caractérisé en ce que la couche de protection (62), qui limite la fente d'air (54), est réalisée en nitrure de silicium.

39. Disque d'enregistrement magnéto-optique selon la revendication 10, caractérisé en ce que la température de la couche d'enregistrement (42) augmente sur la base du rayonnement d'inscription incident et que la couche d'enregistrement est formée par un alliage de terbium, cobalt, fer et platine.

40. Disque d'enregistrement magnéto-optique selon la revendication 8, caractérisé en ce que la structure de support (50) est réalisée en un matériau adhésif transparent du point de vue optique, qui remplit complètement les deux fentes d'air (54, 54).

Fig_1A

Fig_1B

Fig_3A

Fig_3B

Fig_2A

Fig_2B

Fig_4